# EUROPEAN PATENT APPLICATION

(11) **EP 4 722 568 A2**
(43) Date of publication of application: **08.04.2026**
(21) Application number: 26159624.1
(22) Date of filing: 22.08.2022
(51) Int. Cl.: F16J 15/34, F16C 33/10

(54) **SLIDING COMPONENT**

(30) Priority: 25.08.2021 JP 2021137305; 16.05.2022 JP 2022080279
(62) Divisional of application: 22861290.9
(71) Applicant: Eagle Industry Co., Ltd., Minato-ku Tokyo 105-8587 (JP)
(72) Inventor: The designation of the inventor has not yet been filed
(74) Representative: WSL Patentanwälte Partnerschaft mbB

(57) **Abstract**

There is provided a sliding component that allows easy introduction-in or out of a fluid between a groove and a communicating space. In a sliding component 10 in which a pair of sliding rings 10 and 20 rotate relative to each other and which partitions a sealed fluid side space S1 and a leakage side space S2 off from each other, a groove 13 opening to one of the spaces S1 and S2 is provided on a sliding surface 11 of the sliding ring 10, and an inclined surface 6 that faces a fluid space S10 formed between the groove 13 of the sliding ring 10 and the sliding ring 20 and that is expanded toward one of the spaces S1 and S2 is provided at an edge portion 10e of at least one of the sliding rings 10 and 20 on the side of the groove 13.

## Description

### {TECHNICAL FIELD}

The present invention relates to a sliding component, for example, a sliding component which is used for a shaft seal or a bearing of a rotating machine.

### {BACKGROUND ART}

As a sliding component that prevents a leakage of a sealed fluid around a rotating shaft of a rotating machine, for example, there is known a mechanical seal including a pair of sliding rings having an annular shape which rotate relative to each other and of which sliding surfaces slide against each other. In such a mechanical seal, in recent years, there has been a demand for reducing sliding-induced energy loss for environmental measures and the like, and a sliding surface of a sliding ring may be provided with positive pressure generation grooves which communicate with a sealed fluid side and of which one ends are closed in the sliding surface.

For example, in a mechanical seal illustrated in Patent Citation 1, on a sliding surface of one sliding ring, a plurality of positive pressure generation mechanisms, each including a fluid inlet and outlet groove extending in a radial direction, communicating with a sealed fluid side, and not communicating with a leakage side and a positive pressure generation groove communicating with the fluid inlet and outlet groove and extending in a relative rotation direction, are provided in a circumferential direction with land portions interposed therebetween. According to this configuration, during relative rotation of sliding rings, a sealed fluid is introduced into the positive pressure generation groove through the fluid inlet and outlet groove, and the sealed fluid concentrates on a wall portion of an end portion of the positive pressure generation groove in the relative rotation direction to generate a positive pressure, so that sliding surfaces are separated from each other, and a fluid film of the sealed fluid is formed between the sliding surfaces. Therefore, lubricity is improved and low friction is realized.

### {CITATION LIST}

### {Patent Literature}

Patent Citation 1: JP 6444492 B2 (Page 12, FIG. 7)

### {SUMMARY OF INVENTION}

### {Technical Problem}

In the mechanical seal of Patent Citation 1, the sealed fluid inside the positive pressure generation groove moves toward the end portion in the relative rotation direction while following relative rotational sliding of a pair of the sliding rings, so that the sealed fluid is continuously supplied from a space on a sealed fluid side into the positive pressure generation groove through the fluid inlet and outlet groove. However, in the mechanical seal as disclosed in Patent Citation 1, since a corner portion formed by a bottom surface of the fluid inlet and outlet groove and a peripheral surface on the sealed fluid side of the sliding ring is formed at a right angle, when the sealed fluid is introduced from the space on the sealed fluid side into the fluid inlet and outlet groove, a vortex is likely to occur in the vicinity of the corner portion, and the sealed fluid is not effectively introduced into the fluid inlet and outlet groove, so that the amount of the sealed fluid inside the fluid inlet and outlet groove is reduced, which is a risk.

The present invention has been made in view of such problems, and an object of the present invention is to provide a sliding component that allows easy introduction-in or out of a fluid between a groove and a communicating space.

### {Solution to Problem}

In order to solve the foregoing problems, according to the present invention, there is provided a sliding component including a first sliding ring and a second sliding ring that have sliding surfaces rotating relative to each other and that partition a sealed fluid side space and a leakage side space off from each other, wherein the sliding surface of the first sliding ring is provided with a groove opening to at least one of the sealed fluid side space and the leakage side space, and at least one of the first sliding ring and the second sliding ling is provided with an inclined surface that is formed at an edge portion thereof on a side of the groove, that faces a fluid space formed between the groove of the first sliding ring and the second sliding ring, and that is expanded toward one of the sealed fluid side space and the leakage side space which is on the side of the groove. According to the aforesaid feature of the present invention, since a fluid smoothly moves to the fluid space from the space on the side of the groove, i.e., one of the sealed fluid side space and the leakage side space which is on side of the groove or to the space on the side of the groove from the fluid space , along the inclined surface expanded toward the space on the side of the groove, the fluid is easily introduced in or out between the fluid space and the space on the side of the groove.

It may be preferable that the groove includes a fluid inlet and outlet groove opening to the sealed fluid side space or the leakage side space on the side of the groove, and a dynamic pressure generation groove communicating with the fluid inlet and outlet groove and extending in a circumferential direction, and the fluid inlet and outlet groove is deeper than the dynamic pressure generation groove. According to this preferable configuration, since a sufficient amount of the fluid can be held in the fluid inlet and outlet groove, poor lubrication for the dynamic pressure generation groove can be prevented.

It may be preferable that the groove includes a fluid inlet and outlet groove opening to the sealed fluid side space or the leakage side space on the side of the groove, and a dynamic pressure generation groove communicating with the fluid inlet and outlet groove and extending in a circumferential direction, and the fluid inlet and outlet groove and the dynamic pressure generation groove are equal to each other in depth. According to this preferable configuration, the fluid is allowed to smoothly flow between the fluid inlet and outlet groove and the dynamic pressure generation groove.

It may be preferable that the inclined surface is provided on the first sliding ring. According to this preferable configuration, regardless of a sliding state of the pair of sliding rings, a communication state between the inclined surface and the fluid space can always be maintained constant.

It may be preferable that a bottom surface of the fluid inlet and outlet groove and the inclined surface form an obtuse angle. According to this preferable configuration, a vortex is less likely to occur at a boundary portion between the inclined surface and the bottom surface of the fluid inlet and outlet groove.

It may be preferable that the first sliding ring is provided with an inclined groove defined by the inclined surface and side surfaces rising from both circumferential end edges of the inclined surface, at least one of the first sliding ring and the second sliding ling is provided with an expansion surface that is formed at an edge portion thereof on a side of the groove, that is expanded toward one of the sealed fluid side space and the leakage side space which is on the side of the groove, and a communication space partitioned off by the expansion surface and formed to extend in a circumferential direction communicates with the inclined groove. According to this preferable configuration, the sealed fluid can be introduced in or out from the inclined groove in a radial direction and in the circumferential direction.

It may be preferable that the fluid inlet and outlet groove communicates with one of the sealed fluid side space and the leakage side space on a radially inner side, and a radially outermost position of the dynamic pressure generation groove is located radially outside a radially outermost position of the fluid inlet and outlet groove. According to this preferable configuration, a large communication region between the dynamic pressure generation groove and the fluid inlet and outlet groove can be ensured.

It may be preferable that the fluid inlet and outlet groove communicates with one of the sealed fluid side space and the leakage side space on a radially outer side, and a radially innermost position of the dynamic pressure generation groove is located radially inside a radially innermost position of the fluid inlet and outlet groove. According to this preferable configuration, a large communication region between the dynamic pressure generation groove and the fluid inlet and outlet groove can be ensured.

It may be preferable that the dynamic pressure generation grooves are provided on both circumferential sides of the fluid inlet and outlet groove, and the dynamic pressure generation grooves communicate with each other. According to this preferable configuration, since the dynamic pressure generation grooves on both circumferential sides of the fluid inlet and outlet groove communicate with each other, a cavitation generated at a communication portion and a periphery of the communication portion makes it difficult for the fluid to leak to the other space side.

It may be preferable that the fluid inlet and outlet groove communicates with the sealed fluid side space, and the sliding surface of the first sliding ring or the second sliding ring is provided with a spiral groove communicating with the leakage side space and not communicating with the sealed fluid side space. According to this preferable configuration, during relative rotation of the pair of sliding rings, since the sliding surfaces can be separated from each other by the dynamic pressure generation groove and the spiral groove, and a fluid film can be formed between the sliding surfaces by the sealed fluid and a fluid on the leakage side, lubricity between the sliding surfaces is improved.

It may be preferable that the first sliding ring is provided with another inclined surface that is formed an edge portion thereof on the leakage side space and that faces another fluid space formed between the spiral groove and the second sliding ring and that is expanded toward the leakage side space. According to this preferable configuration, the fluid on the leakage side is smoothly introduced in or out from the other fluid space along the other inclined surface.

It may be preferable that a sealed fluid existing in the sealed fluid side space is a liquid, and a fluid existing in the leakage side space is a gas. According to this preferable configuration, during low-speed rotation of the pair of sliding rings, lubrication between the sliding surfaces can be performed by the liquid, and during high-speed rotation, lubrication between the sliding surfaces can be performed by the gas.

It may be preferable that the groove is an open groove having a belt shape in which a circumferential length is longer than a radial length, and the open groove has at least an opening portion that opens to one of the sealed fluid side space and the leakage side space on the side of the groove along a circumferential direction.

According to the thirteenth aspect, since the opening portion formed in the open groove is open along the circumferential direction, and the fluid in the space on the side of the groove is taken into the groove from the opening portion, even when the relative rotation speed of the sliding component increases, a large amount of the fluid in the space on the side of the groove can be taken into the groove from the opening portion, and a desired positive pressure can be generated between the sliding surfaces.

It may be preferable that the open groove includes a first groove portion in which the opening portion is formed and which extends in the circumferential direction, and a second groove portion which extends with a radial component from a downstream end portion of the first groove portion in a relative rotation direction, and of which an end portion is closed. According to this preferable configuration, since the fluid in the space on the side of the groove can be introduced into the other space side further separated from the space on the side of the groove, the movement of the fluid on the other space side to the space on the side of the groove can be suppressed.

It may be preferable that the second groove portion includes an inclined portion extending with a radial component, and an extension portion extending from the inclined portion in the circumferential direction. According to this preferable configuration, the introduction efficiency of the fluid in the space on the side of the groove into the second groove portion can be improved by the inclined portion, and a positive pressure can be generated at a position offset from the first groove portion in the radial direction by the extension portion.

It may be preferable that the open groove is line-symmetrically formed with respect to a line extending in a radial direction. According to this preferable configuration, the sliding component can be used without being limited by a relative rotation direction.

### {BRIEF DESCRIPTION OF DRAWINGS}

FIG. 1 is a longitudinal sectional view illustrating one example of a mechanical seal as a sliding component according to a first embodiment of the present invention.
FIG. 2 is a view of a sliding surface of a stationary seal ring in the first embodiment when viewed in an axial direction.
FIG. 3 is an enlarged view of the sliding surface of the stationary seal ring in the first embodiment when viewed in the axial direction.
FIG. 4A is a cross-sectional view taken along line A-A of FIG. 3, and FIG. 4B is a view of a fluid inlet and outlet space and a periphery of the fluid inlet and outlet space when viewed from a radially inner side.
FIG. 5 is an enlarged view of a sliding surface of a stationary seal ring of a sliding component according to a second embodiment of the present invention when viewed in the axial direction.
FIG. 6 is a cross-sectional view taken along line A'-A' of FIG. 5.
FIG. 7 is a view of a sliding surface of a stationary seal ring of a sliding component according to a third embodiment of the present invention when viewed in the axial direction.
FIG. 8 is an enlarged view of the sliding surface of the stationary seal ring in the third embodiment of the present invention when viewed in the axial direction.
FIG. 9 is a cross-sectional view taken along line B-B of FIG. 8.
FIG. 10 is a view illustrating a modification example of the stationary seal ring in the third embodiment of the present invention when viewed in the axial direction.
FIG. 11 is an enlarged view of a sliding surface of a stationary seal ring of a sliding component according to a fourth embodiment of the present invention when viewed in the axial direction.
FIG. 12 is an enlarged view of a sliding surface of a stationary seal ring of a sliding component according to a fifth embodiment of the present invention when viewed in the axial direction.
FIG. 13 is an enlarged view of a sliding surface of a stationary seal ring of a sliding component according to a sixth embodiment of the present invention when viewed in the axial direction.
FIG. 14A is an enlarged view of a sliding surface of a stationary seal ring of a sliding component according to a seventh embodiment of the present invention when viewed in the axial direction, and FIG. 14B is a cross-sectional view of the same taken along line C-C.
FIG. 15 is a cross-sectional view of a fluid inlet and outlet groove of a sliding component according to an eighth embodiment of the present invention.
FIG. 16 is a cross-sectional view of a fluid inlet and outlet groove of a sliding component according to a ninth embodiment of the present invention.
FIG. 17 is a cross-sectional view of a fluid inlet and outlet groove of a sliding component according to a tenth embodiment of the present invention.
FIG. 18 is a cross-sectional view of a fluid inlet and outlet groove of a sliding component according to an eleventh embodiment of the present invention.
FIG. 19 is a cross-sectional view of a fluid inlet and outlet groove of a sliding component according to a twelfth embodiment of the present invention.
FIG. 20 is a cross-sectional view of a fluid inlet and outlet groove of a sliding component according to a thirteenth embodiment of the present invention.
FIG. 21 is a cross-sectional view of a fluid inlet and outlet groove of a sliding component according to a fourteenth embodiment of the present invention.
FIG. 22A is an enlarged view of a dynamic pressure generation groove of a sliding component according to a fifteenth embodiment of the present invention when viewed in the axial direction, FIG. 22B is a cross-sectional view taken along line G-G of FIG. 22A, and FIG. 22C is a cross-sectional view of the same taken along line H-H.
FIG. 23 is an enlarged view of a dynamic pressure generation groove of a sliding component according to a sixteenth embodiment of the present invention when viewed in the axial direction.
FIG. 24A is an enlarged view of a dynamic pressure generation mechanism of a sliding component according to a seventeenth embodiment of the present invention when viewed in the axial direction, and FIG. 24B is a cross-sectional view taken along line E-E of FIG. 24A.
FIG. 25 is an enlarged view of a dynamic pressure generation mechanism of a sliding component according to an eighteenth embodiment of the present invention when viewed in the axial direction.
FIG. 26 is an enlarged view of a dynamic pressure generation mechanism of a sliding component according to a nineteenth embodiment of the present invention when viewed in the axial direction.
FIG. 27A is an enlarged view of a sliding surface of a stationary seal ring of a sliding component according to a twentieth embodiment of the present invention when viewed in the axial direction, and FIG. 27B is a cross-sectional view taken along line J-J of FIG. 27A.
FIG. 28A is an enlarged view of a sliding surface of a stationary seal ring of a sliding component according to a twenty-first embodiment of the present invention when viewed in the axial direction, and FIG. 28B is a cross-sectional view taken along line K-K of FIG. 28A.
FIG. 29 is a view of a sliding surface of a stationary seal ring of a sliding component according to a twenty-second embodiment of the present invention when viewed in the axial direction.
FIG. 30 is an enlarged view of a groove of a sliding component according to the twenty-second embodiment of the present invention when viewed in the axial direction.
FIG. 31 is an enlarged view of a groove of a sliding component according to a twenty-third embodiment of the present invention when viewed in the axial direction.
FIG. 32 is a view of a sliding surface of a stationary seal ring of a sliding component according to a twenty-fourth embodiment of the present invention when viewed in the axial direction.
FIG. 33 is an enlarged view of a groove of a sliding component according to a twenty-fifth embodiment of the present invention when viewed in the axial direction.
FIG. 34 is an enlarged view of a groove of a sliding component according to a twenty-sixth embodiment of the present invention when viewed in the axial direction.

### {DESCRIPTION OF EMBODIMENTS}

Modes for implementing a sliding component according to the present invention will be described below based on embodiments.

### {First embodiment}

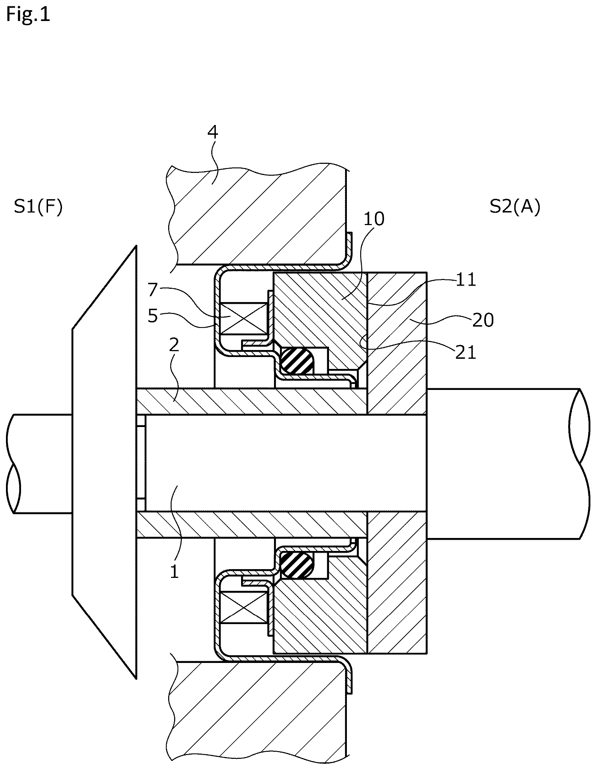

A mechanical seal as a sliding component according to a first embodiment of the present invention will be described with reference to FIGS. 1 to 4. Incidentally, in the present embodiment, a description will be made based on the fact that a sealed fluid F exists in an inner space S1 of the mechanical seal, atmosphere A exists in an outer space S2, a radially inner side of sliding rings forming the mechanical seal is a sealed fluid side (high-pressure side), and a radially outer side is a leakage side (low-pressure side). In addition, for convenience of description, in the drawings, dots may be added to grooves and the like formed on a sliding surface.

A mechanical seal illustrated in FIG. 1 is an outside mechanical seal that seals the sealed fluid F in the inner space S1 which tends to leak from the radially inner side toward the radially outer side of sliding surfaces, and that allows the outer space S2 to communicate with the atmosphere A. Incidentally, in the present embodiment, a mode in which the sealed fluid F is a high-pressure liquid and the atmosphere A is a gas having lower pressure than the sealed fluid F will be provided as an example.

The mechanical seal mainly includes a rotating seal ring 20 as a second sliding ring, and a stationary seal ring 10 as a first sliding ring. The rotating seal ring 20 has an annular shape, and is provided on a rotating shaft 1 so as to be rotatable together with the rotating shaft 1 via a sleeve 2. The stationary seal ring 10 has an annular shape, and is provided on a seal cover 5 fixed to a housing 4 of an attached device, so as to be non-rotatable and movable in an axial direction. The stationary seal ring 10 is biased in the axial direction by an elastic member 7, so that a sliding surface 11 of the stationary seal ring 10 and a sliding surface 21 of the rotating seal ring 20 come into close contact with and slide against each other. Incidentally, the sliding surface 21 of the rotating seal ring 20 is a flat surface, and a recessed portion such as a groove is not provided on the flat surface.

The stationary seal ring 10 and the rotating seal ring 20 are typically made of SiC (as an example of hard material) or a combination of SiC and carbon (as an example of soft material), but are not limited thereto, and any sliding material can be applied as long as the sliding material can be used as a sliding material for a mechanical seal. Incidentally, examples of SiC include sintered bodies using boron, aluminum, carbon, or the like as a sintering aid, and materials consisting of two or more phases with different components and compositions, such as SiC in which graphite particles are dispersed, reaction-sintered SiC consisting of SiC and Si, SiC-TiC, and SiC-TiN, and as carbon, mixed carbon of a carbonaceous substance and a graphitic substance, resin-molded carbon, sintered carbon, and the like can be used. In addition, in addition to the above-described sliding materials, metal materials, resin materials, surface modification materials (e.g., coating materials), composite materials, and the like can also be applied.

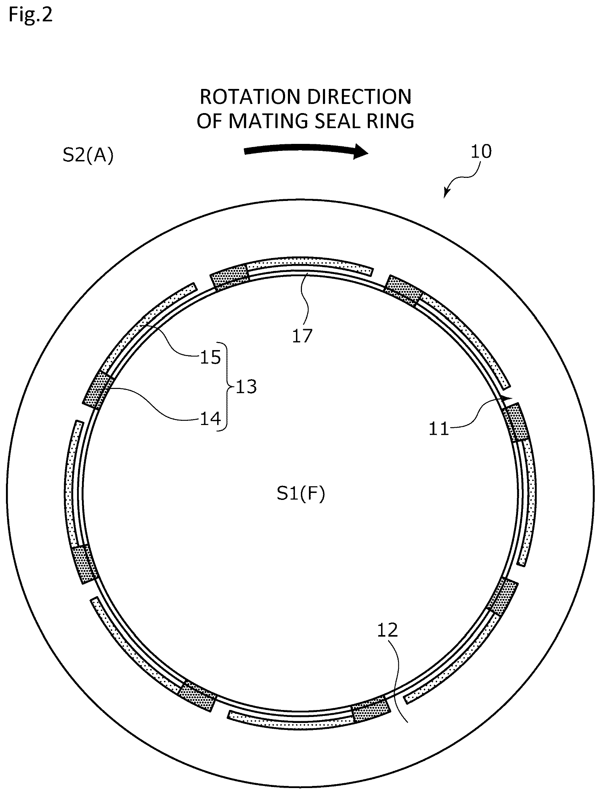

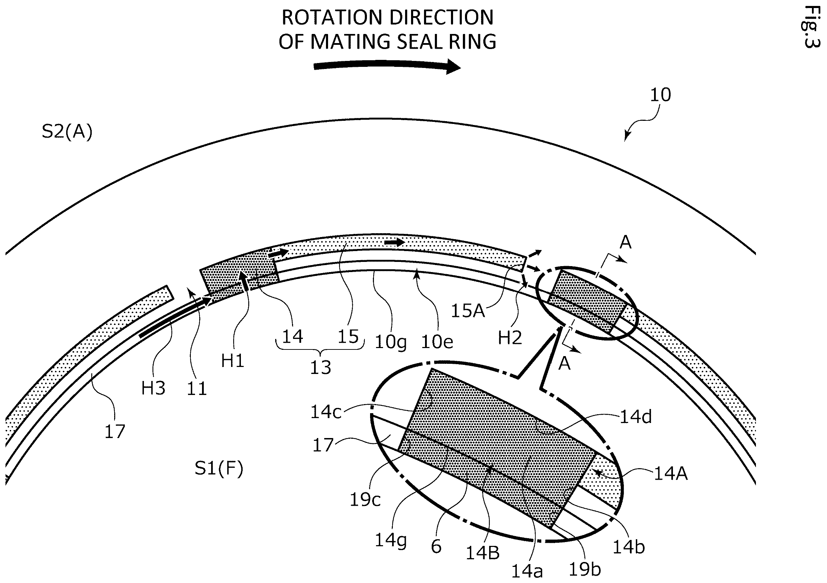

As illustrated in FIGS. 2 and 3, the rotating seal ring 20 that is a mating seal ring slides clockwise relative to the stationary seal ring 10 as indicated by a solid arrow.

A plurality of dynamic pressure generation mechanisms 13 are provided on the sliding surface 11 of the stationary seal ring 10. The dynamic pressure generation mechanisms 13 (eight in the present embodiment) are evenly arranged in a circumferential direction on the radially inner side of the sliding surface 11.

In addition, portions of the sliding surface 11 other than the dynamic pressure generation mechanisms 13 are lands 12 disposed on the same plane and forming a flat surface. The flat surface of the lands 12 functions as a sliding surface that substantially slides against the sliding surface 21 of the rotating seal ring 20.

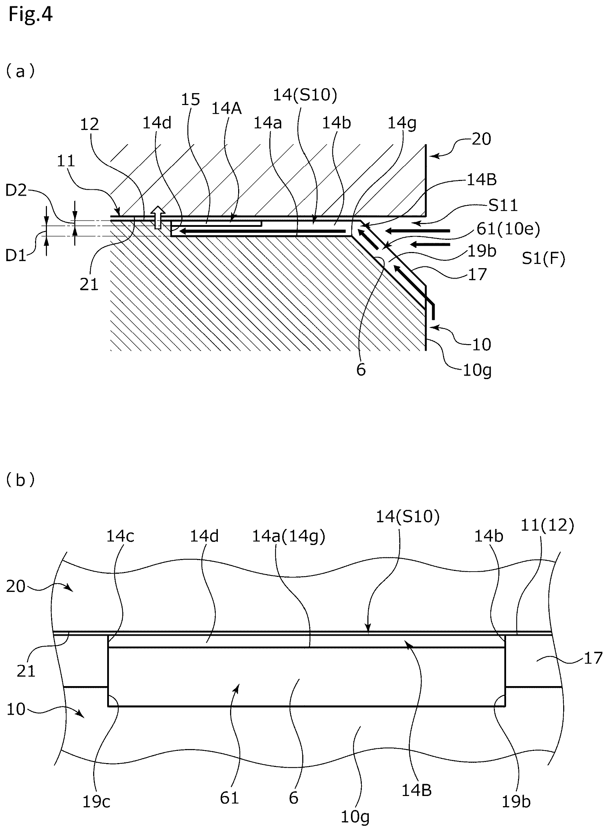

In addition, a plurality of inclined grooves 61 (refer to FIG. 4) and expansion surfaces 17 are provided at an edge portion 10e on an inner space S1 side of the stationary seal ring 10. In other words, the plurality of inclined grooves 61 and expansion surfaces 17 are provided at the edge portion 10e on the radially inner side of the sliding surface 11 of the stationary seal ring 10. The expansion surfaces 17 (eight in the present embodiment) are arranged between the inclined grooves 61 adjacent to each other in the circumferential direction at the edge portion 10e on the radially inner side of the sliding surface 11. In addition, the expansion surfaces 17 have a so-called chamfered shape. In addition, the inclined grooves 61 extend continuously with fluid inlet and outlet grooves 14 to be described later of the dynamic pressure generation mechanisms 13.

In addition, the expansion surfaces 17 are tapered surfaces that are inclined to become deeper gradually from the flat surface of the lands 12 toward an inner peripheral surface 10g of the stationary seal ring 10 (refer to FIG. 4). Incidentally, the expansion surfaces 17 may have unevenness, but are preferably flat surfaces.

As illustrated in FIG. 3, each of the dynamic pressure generation mechanisms 13 includes a fluid inlet and outlet groove 14 as a fluid inlet and outlet groove and a Rayleigh step 15 as a dynamic pressure generation groove. The fluid inlet and outlet groove 14 extends in a radial direction so as to communicate with the inner space S1 and not to communicate with the outer space S2. The Rayleigh step 15 extends concentrically with the stationary seal ring 10 in the circumferential direction and in a clockwise direction from the radially outer side of the fluid inlet and outlet groove 14.

As illustrated in FIG. 4A, a depth D1 of the fluid inlet and outlet groove 14 is formed deeper than a depth D2 of the Rayleigh step 15 (D1 > D2). Incidentally, the Rayleigh step 15 is not limited to extending in an arcuate shape, and may extend linearly. In addition, the Rayleigh step 15 is not limited to being provided concentrically with the stationary seal ring 10, and may be inclined in the circumferential direction.

As illustrated in FIGS. 3, 4A, and 4B, the fluid inlet and outlet groove 14 includes a bottom surface 14a, side surfaces 14b and 14c, and an end surface 14d on the radially outer side. The bottom surface 14a extends parallel to the flat surface of the lands 12 in the radial direction. The side surfaces 14b and 14c rise from both circumferential end edges of the bottom surface 14a. The end surface 14d on the radially outer side rises from a radially outer end of the bottom surface 14a, and is orthogonally connected to the side surfaces 14b and 14c. An opening 14A communicating with the Rayleigh step 15 is formed in the side surface 14b. In addition, an opening 14B communicating with the inner space S1 is formed on the radially inner side of the fluid inlet and outlet groove 14.

An inclined surface 6 extending to the radially inner side is continuously provided at an end edge 14g on the radially inner side of the bottom surface 14a of the fluid inlet and outlet groove 14. In detail, the inclined surface 6 is inclined and extends linearly such that a depth of the inclined surface 6 becomes deeper from the end edge 14g on the radially inner side of the bottom surface 14a of the fluid inlet and outlet groove 14 toward the inner peripheral surface 10g of the stationary seal ring 10, in other words, a distance from the sliding surface 21 of the rotating seal ring 20 increases. In addition, the inclined surface 6 is parallel to the expansion surfaces 17.

The bottom surface 14a of the fluid inlet and outlet groove 14 and the inclined surface 6 form an obtuse angle. Incidentally, in the present embodiment, a mode in which the bottom surface 14a of the fluid inlet and outlet groove 14 and the inclined surface 6 form an obtuse angle is provided as an example; however, the present invention is not limited thereto, and a boundary between the bottom surface 14a and the inclined surface 6 may be continuous through a curved surface. In addition, a small step may be formed in a part of the vicinity of the boundary portion between the bottom surface 14a and the inclined surface 6.

Namely, the inclined surface 6 is continuous with a first fluid inlet and outlet space S10 as a fluid space formed between the fluid inlet and outlet groove 14 and the sliding surface 21 of the rotating seal ring 20, and expands toward the inner space S1 side in a direction away from the rotating seal ring 20, namely, in a depth direction of the fluid inlet and outlet groove 14 (hereinafter, the distance away from the rotating seal ring 20 and the direction thereof may be simply referred to as a "depth" and a "depth direction", respectively). Incidentally, it is preferably that the inclined surface 6 is a flat surface.

The inclined surface 6 and the expansion surface 17 are connected by side surfaces 19b and 19c rising from both circumferential end edges of the inclined surface 6. The side surfaces 19b and 19c are continuous with the side surfaces 14b and 14c of the fluid inlet and outlet groove 14 in the radial direction.

Namely, the inclined groove 61 surrounded by the inclined surface 6 and the side surfaces 19b and 19c is formed at the edge portion 10e on the inner space S1 side of the stationary seal ring 10. The first fluid inlet and outlet space S10 communicates with the inner space S1 through the inclined groove 61.

In addition, the inclined grooves 61 adjacent to each other in the circumferential direction communicate with each other through a communication space S11. The communication space S11 is formed between the expansion surface 17 and a radially inner-side end portion of the rotating seal ring 20.

Next, the operation of the stationary seal ring 10 and the rotating seal ring 20 during relative rotation will be described with reference to FIGS. 3 and 4. Incidentally, the flow of the sealed fluid F or the atmosphere A in FIG. 3 is schematically illustrated without specifying a relative rotation speed of the rotating seal ring 20.

First, when the rotating seal ring 20 is not in rotation and is stopped, the sealed fluid F flows into the fluid inlet and outlet groove 14. Incidentally, since the stationary seal ring 10 is biased to a rotating seal ring 20 side by the elastic member 7, the sliding surfaces 11 and 21 are in the state of contact with each other, and there is almost no leakage of the sealed fluid F between the sliding surfaces 11 and 21 to the outer space S2.

As illustrated in FIG. 3, in a state where the rotating seal ring 20 rotates relative to the stationary seal ring 10, the sealed fluid F inside the Rayleigh step 15 follows and moves in a rotation direction of the rotating seal ring 20 due to shear with the sliding surface 21, so that the sealed fluid F in the inner space S1 is drawn into the fluid inlet and outlet groove 14 through the inclined groove 61. Namely, inside the fluid inlet and outlet groove 14, as indicated by an arrow H1, the sealed fluid F moves from the fluid inlet and outlet groove 14 toward an end portion 15A of the Rayleigh step 15 on a downstream side in the relative rotation direction.

The sealed fluid F that has moved toward the end portion 15A of the Rayleigh step 15 is increased in pressure at the end portion 15A of the Rayleigh step 15 and in the vicinity of the end portion 15A. Namely, a positive pressure is generated at the end portion 15A of the Rayleigh step 15 and in the vicinity of the end portion 15A.

Since the depth D2 of the Rayleigh step 15 is shallow, even when the movement amount of the sealed fluid F is small due to a low rotation speed of the rotating seal ring 20, a positive pressure is generated at the end portion 15A of the Rayleigh step 15 and in the vicinity of the end portion 15A.

In addition, the sliding surfaces 11 and 21 are slightly separated from each other by a force caused by the positive pressure generated at the end portion 15A of the Rayleigh step 15 and in the vicinity of the end portion 15A. Accordingly, the sealed fluid F inside the dynamic pressure generation mechanism 13 indicated by an arrow H2 mainly flows into a gap between the sliding surfaces 11 and 21. Since the sealed fluid F is interposed between the sliding surfaces 11 and 21 in such a manner, even during low-speed rotation, lubricity can be improved and wear between the sliding surfaces 11 and 21 can be suppressed. Incidentally, since the floating distance between the sliding surfaces 11 and 21 is slight, the amount of leakage of the sealed fluid F to the outer space S2 is small.

In addition, the depth D1 of the fluid inlet and outlet groove 14 is formed deeper than the depth D2 of the Rayleigh step 15, and a large amount of the sealed fluid F can be held in the fluid inlet and outlet groove 14.

In addition, as illustrated in FIG. 4, the inclined surface 6 inclined to expand in the depth direction is continuously provided on the radially inner side of the bottom surface 14a of the fluid inlet and outlet groove 14. Accordingly, since the sealed fluid F that has flowed in in the radial direction from a deeper position than that of the fluid inlet and outlet groove 14 is smoothly supplied to the first fluid inlet and outlet space S10 along the inclined surface 6, the sealed fluid F is easily introduced into the first fluid inlet and outlet space S10, and a reduction in the amount of the sealed fluid F in the first fluid inlet and outlet space S10 can be suppressed. In other words, a vortex is less likely to occur between the bottom surface 14a of the fluid inlet and outlet groove 14 and the inclined surface 6. Namely, poor lubrication between the sliding surfaces 11 and 21 during low-speed rotation can be avoided.

In addition, since the bottom surface 14a of the fluid inlet and outlet groove 14 and the inclined surface 6 form an obtuse angle, a vortex is less likely to occur at the boundary portion between the bottom surface 14a and the inclined surface 6, namely, in the vicinity of the end edge 14g, and the sealed fluid F is smoothly supplied from the inclined surface 6 to the first fluid inlet and outlet space S10.

In addition, the inclined surface 6 is provided continuously with the bottom surface 14a of the fluid inlet and outlet groove 14. Namely, since the inclined surface 6 is provided on the stationary seal ring 10 provided with the fluid inlet and outlet groove 14, regardless of the relative positions of the stationary seal ring 10 and the rotating seal ring 20 in the circumferential direction or in the axial direction, a communication state between the inclined surface 6 and the fluid inlet and outlet groove 14 can always be maintained constant.

In addition, since the plurality of inclined grooves 61 are provided to be separated from each other in the circumferential direction, and the inclined grooves 61 adjacent to each other communicate with each other through the communication space S11, the sealed fluid F can be introduced into the inclined grooves 61 in the radial direction (refer to the arrow H1 in FIG. 3) and in the circumferential direction (refer to an arrow H3 in FIG. 3).

In addition, since the expansion surfaces 17 may be formed in an annular shape on the stationary seal ring 10 by polishing or the like, and then the dynamic pressure generation mechanisms 13 may be processed by laser or the like, it is easy to manufacture the stationary seal ring 10.

In addition, since the inclined groove 61 has the side surfaces 19b and 19c, the sealed fluid F introduced into the inclined groove 61 is guided toward the first fluid inlet and outlet space S10 in the radial direction.

In addition, since the expansion surface 17 prevents the formation of an edge on the radially inner side of the fluid inlet and outlet groove 14, damage to a radially inner-side end portion of the fluid inlet and outlet groove 14 during relative rotational sliding can be avoided.

Incidentally, in the present embodiment, a mode in which the expansion surface 17 extends between the inclined grooves 61 adjacent to each other in the circumferential direction has been provided as an example; however, the expansion surface may be interrupted on its way in the circumferential direction.

### {Second embodiment}

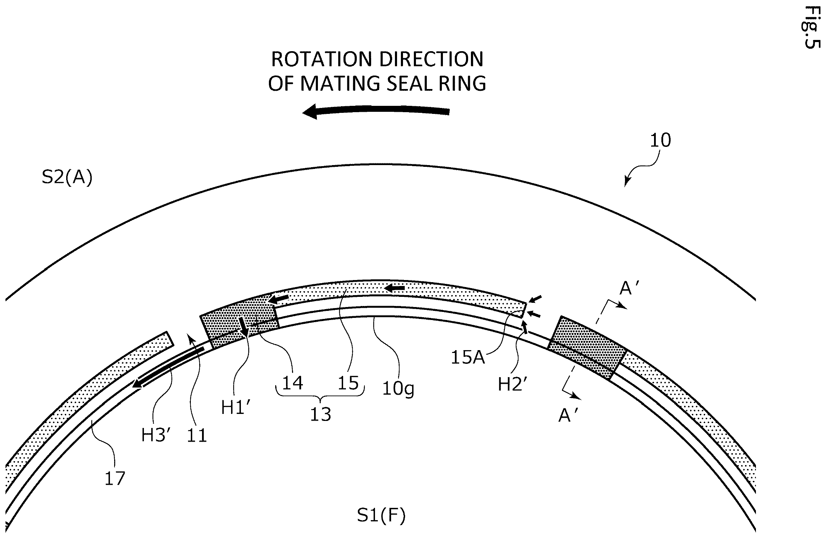

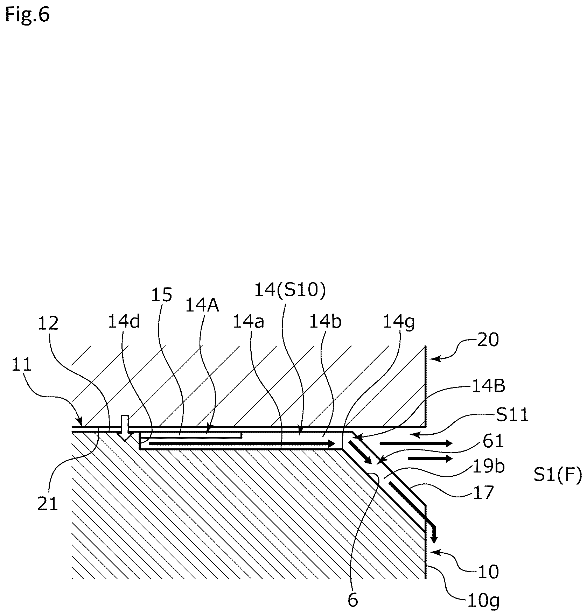

Next, a mechanical seal as a sliding component according to a second embodiment of the present invention will be described with reference to FIGS. 5 and 6. Incidentally, the descriptions of configurations that are the same as and overlap with the configurations of the first embodiment will be omitted.

The mechanical seal of the second embodiment has the same configuration as the mechanical seal of the first embodiment, and is different in the rotation direction of the rotating seal ring 20. As illustrated in FIG. 5, the rotating seal ring 20 slides counterclockwise relative to the stationary seal ring 10 as indicated by a solid arrow.

As illustrated in FIG. 5, in a state where the rotating seal ring 20 rotates relative to the stationary seal ring 10, the sealed fluid F inside the Rayleigh step 15 follows and moves in the rotation direction of the rotating seal ring 20 due to shear with the sliding surface 21. Accordingly, the sealed fluid F inside the Rayleigh step 15 moves to the fluid inlet and outlet groove 14 as indicated by an arrow H1', and is discharged to the inner space S1. In addition, as indicated by an arrow H3', a fraction of the sealed fluid F inside the fluid inlet and outlet groove 14 is discharged to the expansion surface 17 on a downstream side of the relative rotation.

As the sealed fluid F inside the Rayleigh step 15 moves to the fluid inlet and outlet groove 14, the pressure inside the Rayleigh step 15 becomes relatively negative. Particularly, the pressure becomes at its lowest at the end portion 15A of the Rayleigh step 15. For this reason, the sealed fluid F between the sliding surfaces 11 and 21 in the vicinity of the end portion 15A can be collected into the Rayleigh step 15, and the sliding surfaces 11 and 21 can be brought close to each other by a force caused by the negative pressure.

In addition, as illustrated in FIG. 6, a fraction of the sealed fluid F that has moved from the Rayleigh step 15 to the fluid inlet and outlet groove 14 is discharged to the inner space S1 along the bottom surface 14a, and the other fraction is smoothly discharged to the inner space S1 along the inclined surface 6.

### {Third embodiment}

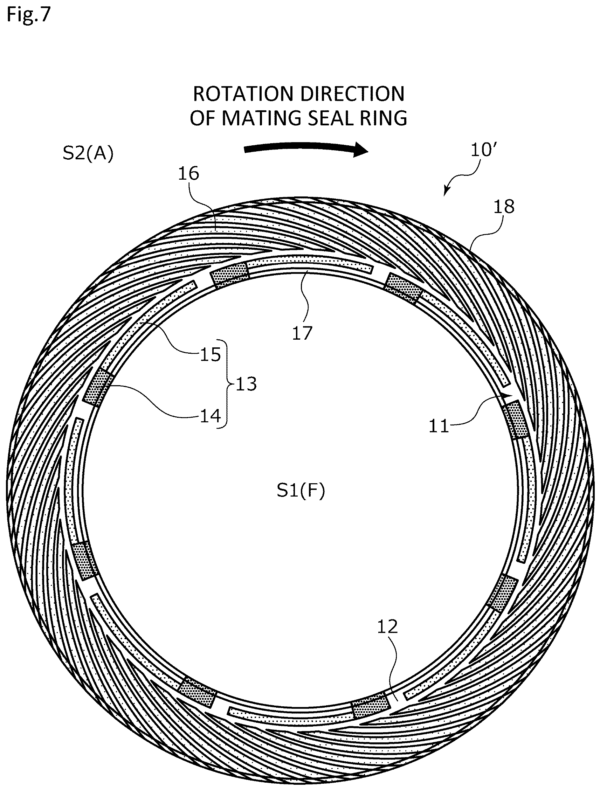

Next, a mechanical seal as a sliding component according to a third embodiment of the present invention will be described with reference to FIGS. 7 to 9. Incidentally, the descriptions of configurations that are the same as and overlap with the configurations of the first embodiment will be omitted.

A plurality of the dynamic pressure generation mechanisms 13 and a plurality of spiral grooves 16 are provided on the sliding surface 11 of a stationary seal ring 10' of the third embodiment. The dynamic pressure generation mechanisms 13 have the same configuration as those of the mechanical seal of the first embodiment.

The spiral grooves 16 (48 in the present embodiment) are evenly arranged in the circumferential direction on the radially outer side of the sliding surface 11.

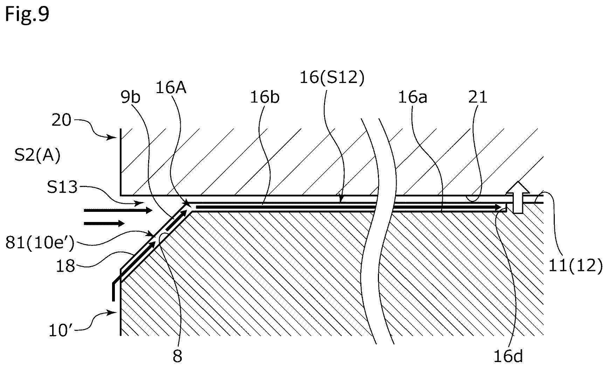

In addition, a plurality of inclined grooves 81 (refer to FIG. 9) and expansion surfaces 18 are provided at an edge portion 10e' on an outer space S2 side of the stationary seal ring 10'. In other words, the plurality of inclined grooves 81 and expansion surfaces 18 are provided at the edge portion 10e' on the radially outer side of the sliding surface 11 of the stationary seal ring 10'.

The expansion surfaces 18 (48 in the present embodiment) are arranged between the inclined grooves 81 adjacent to each other in the circumferential direction at the edge portion 10e' on the radially outer side of the sliding surface 11. In addition, the expansion surfaces 18 have a so-called chamfered shape. In addition, the inclined grooves 81 extend continuously with the spiral grooves 16.

In addition, a portion of the sliding surface 11 other than the dynamic pressure generation mechanisms 13 and the spiral grooves 16 is a land 12 forming a flat surface. In detail, the land 12 includes land portions between the dynamic pressure generation mechanisms 13 adjacent to each other in the circumferential direction; land portions between the spiral grooves 16 adjacent to each other in the circumferential direction; and land portions between the dynamic pressure generation mechanisms 13 and the spiral grooves 16 separated from each other in the radial direction, and the land portions are disposed on the same plane to form the flat surface of the land 12.

The expansion surfaces 18 are tapered surfaces that are inclined to become deeper gradually from the flat surface of the lands 12 toward an outer peripheral surface of the stationary seal ring 10' (refer to FIG. 9). Incidentally, the expansion surfaces 18 may have unevenness, but are preferably flat surfaces.

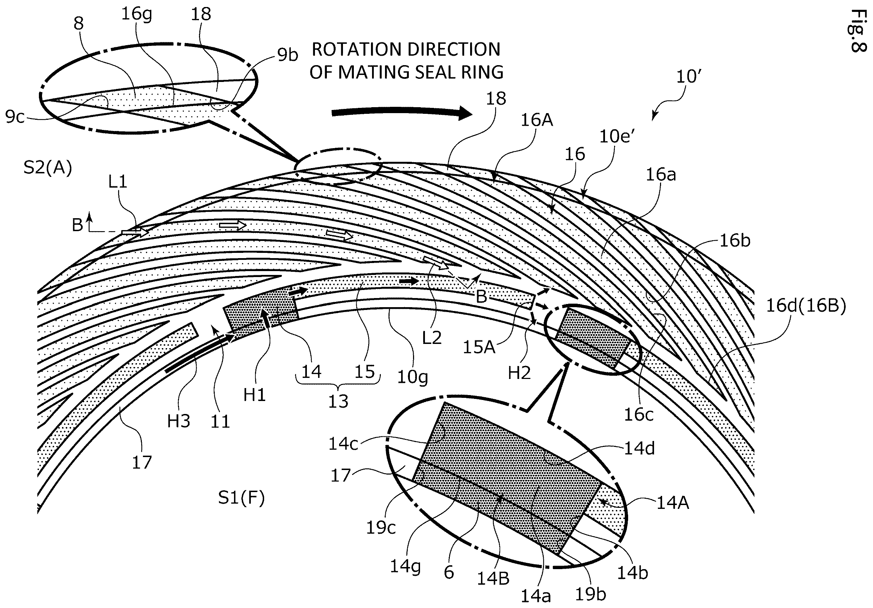

Returning to FIG. 8, the spiral grooves 16 extend in an arcuate shape from the radially outer side toward the radially inner side while being inclined with a clockwise component. The spiral grooves 16 communicate with the outer space S2, and do not communicate with the inner space S1.

The spiral grooves 16 are formed with a constant depth in the circumferential direction. Incidentally, the spiral grooves 16 are not limited to extending in an arcuate shape while being inclined, and may extend linearly.

As illustrated in FIGS. 8 and 9, each of the spiral grooves 16 includes a bottom surface 16a, side surfaces 16b and 16c, and an end surface 16d. The bottom surface 16a extends parallel to the flat surface of the land 12 in the radial direction. The side surfaces 16b and 16c rise from both circumferential end edges of the bottom surface 16a. The end surface 16d connects radially inner ends of the bottom surface 16a and the side surfaces 16b and 16c. An opening 16A communicating with the outer space S2 is formed on the radially outer side of the spiral groove 16.

Another inclined surface 8 extending to the radially outer side in parallel to the expansion surface 18 is continuously provided at an end edge on the radially outer side of the bottom surface 16a of the spiral groove 16. In detail, the other inclined surface 8 is inclined and extends linearly in the depth direction from an end edge 16g on the radially outer side of the bottom surface 16a of the spiral groove 16 toward the outer peripheral surface of the stationary seal ring 10'. The bottom surface 16a of the spiral groove 16 and the inclined surface 8 form an obtuse angle.

Namely, the inclined surface 8 is continuous with a second fluid inlet and outlet space S12 as another fluid space formed between the spiral groove 16 and the sliding surface 21 of the rotating seal ring 20, and expands toward the outer space S2 side. Incidentally, the inclined surface 8 may have unevenness or a curved surface, but is preferably a flat surface.

The inclined surface 8 and the expansion surface 18 are connected by side surfaces 9b and 9c that rise from both circumferential end edges of the inclined surface 8, and that are continuous with the side surfaces 16b and 16c in the radial direction.

Namely, the inclined groove 81 surrounded by the inclined surface 8 and the side surfaces 9b and 9c is formed at the edge portion 10e' on the outer space S2 side of the stationary seal ring 10'. The spiral groove 16 communicates with the outer space S2 through the inclined groove 61.

In addition, the inclined grooves 81 adjacent to each other in the circumferential direction communicate with each other through a communication space S13. The communication space S13 is formed between the expansion surface 18 and the rotating seal ring 20.

Next, the operation of the stationary seal ring 10' and the rotating seal ring 20 during relative rotation will be described with reference to FIGS. 8 and 9. Incidentally, the operation will be described also with reference to FIGS. 3 and 4. Incidentally, the flow of the sealed fluid F or the atmosphere A in FIG. 8 is schematically illustrated without specifying a relative rotation speed of the rotating seal ring 20. In addition, FIG. 4 illustrates low-speed relative rotation of the stationary seal ring 10 and the rotating seal ring 20, and FIG. 9 illustrates high-speed relative rotation of the stationary seal ring 10' and the rotating seal ring 20.

First, when the rotating seal ring 20 is not in rotation and is stopped, the sealed fluid F flows into the fluid inlet and outlet groove 14. Incidentally, since the stationary seal ring 10 is biased to the rotating seal ring 20 side by the elastic member 7, the sliding surfaces 11 and 21 are in the state of contact with each other, and there is almost no leakage of the sealed fluid F between the sliding surfaces 11 and 21 to the outer space S2.

As illustrated in FIG. 3, at low speed immediately after the rotating seal ring 20 starts rotating relative to the stationary seal ring 10, as described above, a positive pressure is generated at the end portion 15A of the Rayleigh step 15 and in the vicinity of the end portion 15A.

On the other hand, in the spiral groove 16, during low-speed relative rotation of the rotating seal ring 20 and the stationary seal ring 10, the atmosphere A is not sufficiently dense inside the spiral groove 16, and a high positive pressure is not generated, and a force caused by the positive pressure generated by the spiral groove 16 is relatively smaller than a force caused by the positive pressure generated at the end portion 15A of the Rayleigh step 15 and in the vicinity thereof. Therefore, during low-speed rotation of the rotating seal ring 20, the force caused by the positive pressure generated at the end portion 15A of the Rayleigh step 15 and in the vicinity thereof mainly acts to separate the sliding surfaces 11 and 21 from each other.

When the relative rotation speed of the rotating seal ring 20 increases, as illustrated in FIG. 8, the atmosphere A inside the spiral groove 16 follows and moves in the rotation direction of the rotating seal ring 20 due to shear with the sliding surface 21, and the atmosphere A in the outer space S2 is drawn into the spiral groove 16. Namely, inside the spiral groove 16, as indicated by an arrow L1, a large amount of the atmosphere A moves from the opening 16A on the radially outer side toward a radially inner-side end portion 16B.

The atmosphere A that has moved toward the radially inner-side end portion 16B of the spiral groove 16 is increased in pressure at the radially inner-side end portion 16B of the spiral groove 16 and in the vicinity of the radially inner-side end portion 16B. Namely, a positive pressure is generated at the radially inner-side end portion 16B of the spiral groove 16 and in the vicinity thereof.

In such a manner, the force caused by the positive pressure generated at the radially inner-side end portion 16B of the spiral groove 16 and in the vicinity thereof is added to the force caused by the positive pressure generated at the end portion 15A of the Rayleigh step 15 and in the vicinity thereof, and the sliding surfaces 11 and 21 are further separated from each other compared to when the speed is low. Accordingly, the atmosphere A inside the spiral groove 16 indicated by an arrow L2 mainly flows into the gap between the sliding surfaces 11 and 21.

Since the atmosphere A inside the spiral groove 16 indicated by the arrow L2 acts to push the sealed fluid F in the vicinity of the radially inner-side end portion 16B of the spiral groove 16 back to the inner space S1 side, the amount of leakage of the sealed fluid F into the spiral groove 16 or the outer space S2 is small.

Since the mechanical seal of the present embodiment is designed such that during high-speed rotation, a positive pressure generation capability by all the spiral grooves 16 is sufficiently greater than a positive pressure generation capability by all the dynamic pressure generation mechanisms 13, finally, a state where only the atmosphere A exists between the sliding surfaces 11 and 21, namely, gas lubrication is achieved.

In addition, as illustrated in FIG. 9, the other inclined surface 8 inclined to expand in the depth direction is continuously provided on the radially outer side of the bottom surface 16a of the spiral groove 16. Accordingly, the occurrence of a vortex between the bottom surface 16a of the spiral groove 16 and the inclined surface 8 can be suppressed, and since the atmosphere A is smoothly supplied to the second fluid inlet and outlet space S12 along the inclined surface 8, a reduction in the amount of the atmosphere A in the second fluid inlet and outlet space S12 can be suppressed. Namely, poor lubrication between the sliding surfaces 11 and 21 during high-speed rotation can be avoided.

In addition, the sealed fluid F in the inner space S1 is a liquid, and the fluid in the outer space S2 that is the leakage side is the atmosphere A, namely, a gas. During low-speed rotation, lubrication between the sliding surfaces 11 and 21 can be performed by the liquid, and during high-speed rotation, lubrication between the sliding surfaces 11 and 21 can be performed by the gas. In other words, lubrication between the sliding surfaces 11 and 21 can be appropriately performed according to the relative rotation speed between the stationary seal ring 10' and the rotating seal ring 20.

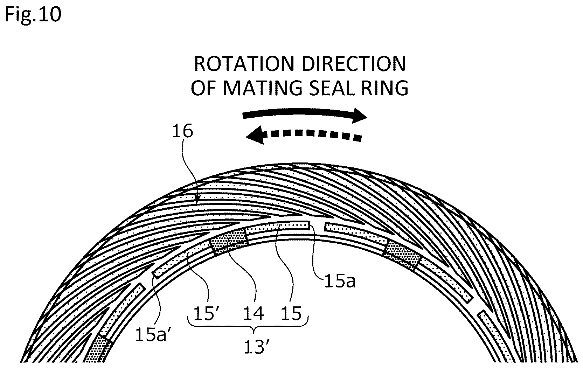

Incidentally, in the third embodiment, a mode in which the dynamic pressure generation mechanism 13 includes the fluid inlet and outlet groove 14 and the Rayleigh step 15 has been provided as an example; however, for example, as illustrated in FIG. 10, a dynamic pressure generation mechanism 13' may include the fluid inlet and outlet groove 14; the Rayleigh step 15; and a reverse Rayleigh step 15' extending from the fluid inlet and outlet groove 14 in a direction opposite to the Rayleigh step 15.

According to this configuration, as indicated by a solid arrow in FIG. 10, when the rotating seal ring 20 rotates in the clockwise direction on the drawing sheet, a positive pressure can be generated at an end portion 15a of the Rayleigh step 15, and a negative pressure can be generated at an end portion 15a' of the reverse Rayleigh step 15'.

On the other hand, as indicated by a dotted arrow in FIG. 10, when the rotating seal ring 20 rotates in a counterclockwise direction on the drawing sheet, a negative pressure can be generated at the end portion 15a of the Rayleigh step 15, and a positive pressure can be generated at the end portion 15a' of the reverse Rayleigh step 15'.

### {Fourth embodiment}

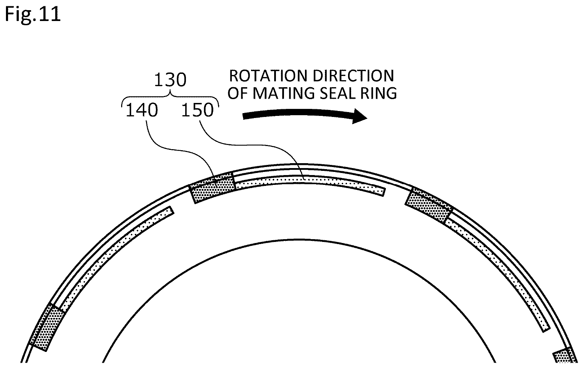

Next, a mechanical seal as a sliding component according to a fourth embodiment of the present invention will be described with reference to FIG. 11. Incidentally, the descriptions of configurations that are the same as and overlap with the configurations of the first embodiment will be omitted.

In the mechanical seal of the fourth embodiment, dynamic pressure generation mechanisms 130, each including a fluid inlet and outlet groove 140 and a dynamic pressure generation groove 150, are formed on the radially outer side of the sliding surface of the stationary seal ring. Since the operation of the stationary seal ring 10 and the rotating seal ring 20 during relative rotation is substantially the same as in the first embodiment except that inner and outer diameters are changed, the description thereof will be omitted.

### {Fifth embodiment}

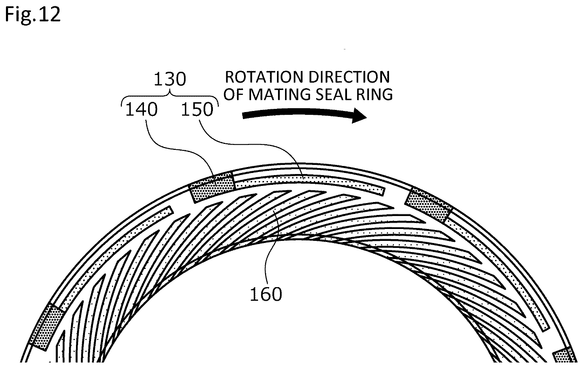

Next, a mechanical seal as a sliding component according to a fifth embodiment of the present invention will be described with reference to FIG. 12. Incidentally, the descriptions of configurations that are the same as and overlap with the configurations of the third embodiment will be omitted.

In the mechanical seal of the fifth embodiment, the dynamic pressure generation mechanisms 130, each including the fluid inlet and outlet groove 140 and the dynamic pressure generation groove 150, are formed on the radially outer side of the sliding surface of the stationary seal ring, and spiral grooves 160 are formed on the radially inner side. Since the operation of the stationary seal ring 10 and the rotating seal ring 20 during relative rotation is substantially the same as in the third embodiment except that inner and outer diameters are changed, the description thereof will be omitted.

### {Sixth embodiment}

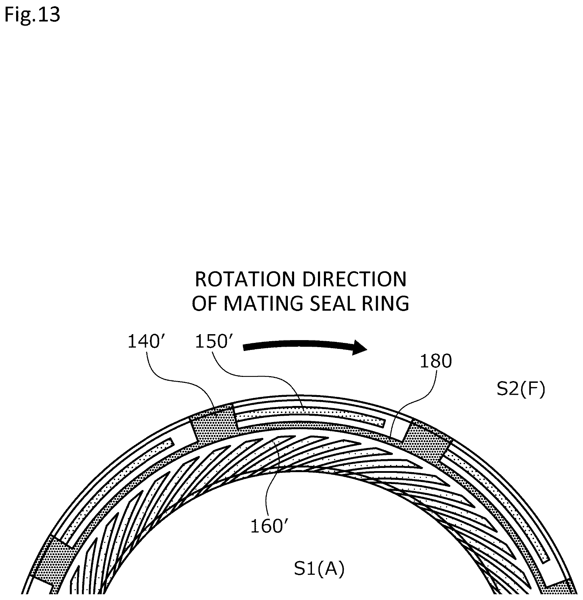

Next, a mechanical seal as a sliding component according to a sixth embodiment of the present invention will be described with reference to FIG. 13. Incidentally, the descriptions of configurations that are the same as and overlap with the configurations of the fifth embodiment will be omitted.

In the mechanical seal of the sixth embodiment, radially inner-side end portions of fluid inlet and outlet grooves 140' extend further to the radially inner side than dynamic pressure generation grooves 150'. The radially inner-side end portions of the fluid inlet and outlet grooves 140' communicate with an annular groove 180 that is a deep groove. The annular groove 180 partitions the dynamic pressure generation grooves 150' on the radially outer side and spiral grooves 160' on the radially inner side off from each other in the radial direction.

The annular groove 180 can collect the sealed fluid F flowing from the outer space S2 into the gap between the sliding surfaces. In addition, the sealed fluid F flowing to the radially inner side of the annular groove 180 is pushed back to the radially outer side by the spiral grooves 160', and is collected into the annular groove 180. Accordingly, both lubricity and sealability can be achieved.

### {Seventh embodiment}

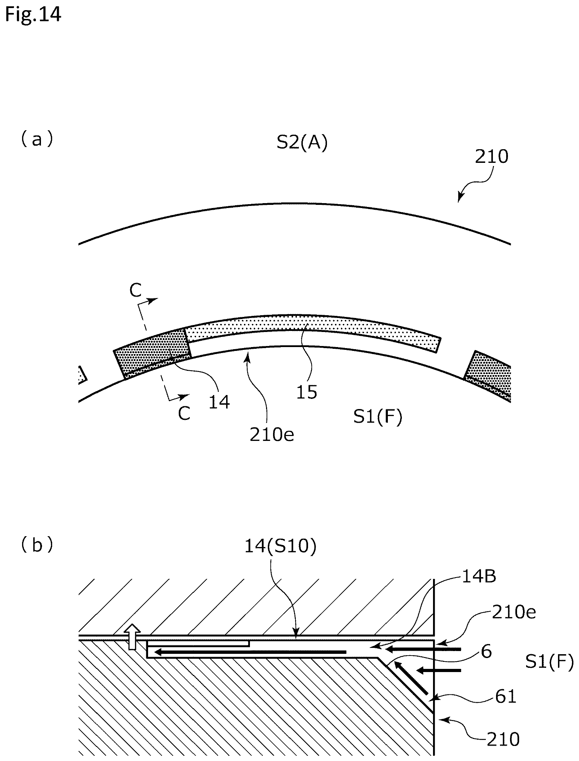

Next, a mechanical seal as s sliding component according to a seventh embodiment of the present invention will be described with reference to FIG. 14. Incidentally, the descriptions of configurations that are the same as and overlap with the configurations of the first embodiment will be omitted. In addition, FIG. 14B illustrates when the rotating seal ring rotates.

The mechanical seal of the seventh embodiment is different from the mechanical seal of the first embodiment in that the expansion surfaces 17 and the expansion surfaces 18 are not provided.

As illustrated in FIGS. 14A and 14B, in a stationary seal ring 210 of the seventh embodiment, since the expansion surfaces 17 are not provided at an edge portion 210e on the inner space S1 side, a plurality of the inclined grooves 61 provided in the circumferential direction and having the respective inclined surfaces 6 do not communicate with the inclined grooves 61, which are adjacent thereto in the circumferential direction, in the circumferential direction. In other words, the plurality of inclined grooves 61 are independently formed in the circumferential direction.

Even in this case, the sealed fluid F can be smoothly supplied to the first fluid inlet and outlet spaces S10 along the inclined surfaces 6.

In addition, in the stationary seal ring 210, the expansion surfaces 18 are not provided at the edge portion 210e on the inner space S1 side.

### {Eighth embodiment}

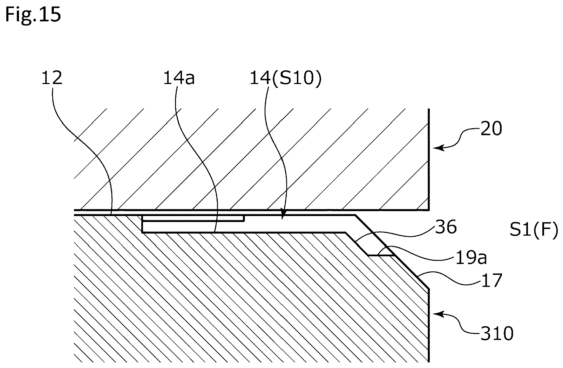

Next, a mechanical seal as a sliding component according to an eighth embodiment of the present invention will be described with reference to FIG. 15. Incidentally, the descriptions of configurations that are the same as and overlap with the configurations of the first embodiment will be omitted.

In a stationary seal ring 310 of the mechanical seal of the eighth embodiment, an inclined surface 36 extends from the end edge on the radially inner side of the bottom surface 14a of the fluid inlet and outlet groove 14 to the radially inner side, and unlike the first embodiment, the inclined surface 36 is not continuous with an inner peripheral surface of the stationary seal ring 310. In addition, an end surface 19a extending from a radially inner end of the inclined surface 36 in parallel to the flat surface of the lands 12 extends further to the radially inner side, and the end surface 19a is continuous with the expansion surface 17.

### {Ninth embodiment}

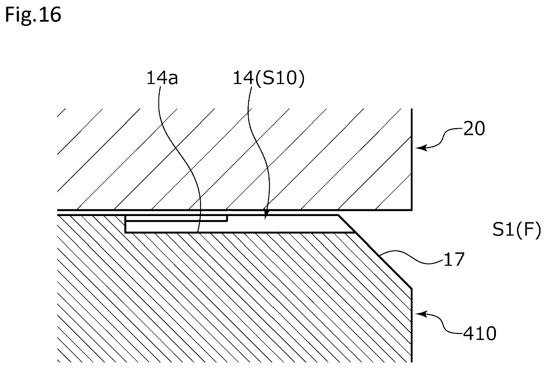

Next, a mechanical seal as a sliding component according to a ninth embodiment of the present invention will be described with reference to FIG. 16. Incidentally, the descriptions of configurations that are the same as and overlap with the configurations of the first embodiment will be omitted.

In a stationary seal ring 410 of the mechanical seal of the ninth embodiment, the bottom surface 14a of the fluid inlet and outlet groove 14 is continuous with the expansion surface 17. Namely, in the ninth embodiment, the expansion surface 17 functions as an inclined surface that guides the sealed fluid F to the fluid inlet and outlet groove 14.

According to this configuration, since the sealed fluid F can be smoothly supplied to the first fluid inlet and outlet space S10 by the expansion surface 17, there is no need to process inclined grooves and the like in addition to the expansion surface 17, and the stationary seal ring 410 can be easily manufactured.

### {Tenth embodiment}

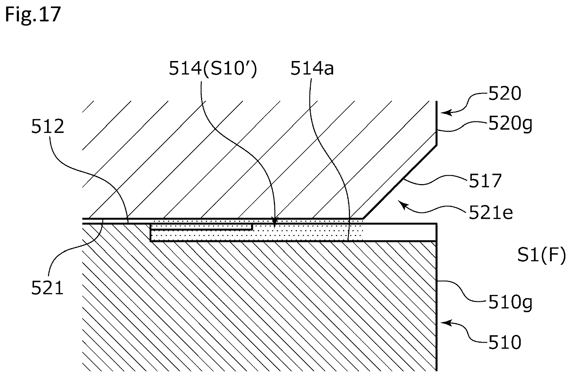

Next, a mechanical seal as a sliding component according to a tenth embodiment of the present invention will be described with reference to FIG. 17. Incidentally, the descriptions of configurations that are the same as and overlap with the configurations of the first embodiment will be omitted.

In a stationary seal ring 510 of the mechanical seal of the tenth embodiment, the expansion surface 17 is not formed, and a bottom surface 514a of a fluid inlet and outlet groove 514 extends to an inner peripheral surface 510g of the stationary seal ring 510 in parallel to a flat surface of a land 512. Namely, the bottom surface 514a of the fluid inlet and outlet groove 514 and the inner peripheral surface 510g of the stationary seal ring 510 are substantially orthogonal to each other.

In addition, an expansion surface 517 is formed at an edge portion 521e on the radially inner side of a sliding surface 521 of a rotating seal ring 520. The expansion surface 517 has a tapered shape that is inclined from the sliding surface 521 toward an inner peripheral surface 520g of the rotating seal ring 520 in a direction away from the stationary seal ring 510. Namely, the expansion surface 517 is continuous with a first fluid inlet and outlet space S10' (refer to a dotted portion in FIG. 17), and expands toward the inner space S1 side.

According to this configuration, the sealed fluid F can be smoothly supplied to the first fluid inlet and outlet space S10' along the expansion surface 517.

Incidentally, in the tenth embodiment, a mode in which the expansion surface 517 is formed in an annular shape, namely, a mode in which a communication space is formed over the entire circumference has been provided as an example; however, the present invention is not limited thereto, and the expansion surface may be interrupted in the circumferential direction.

### {Eleventh embodiment}

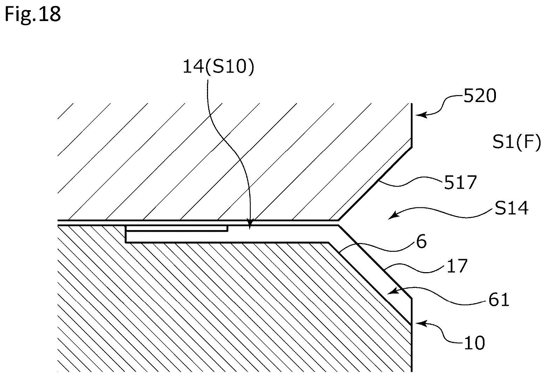

Next, a mechanical seal as a sliding component according to an eleventh embodiment of the present invention will be described with reference to FIG. 18. Incidentally, the descriptions of configurations that are the same as and overlap with the configurations of the first embodiment will be omitted.

The mechanical seal of the eleventh embodiment is configured by a combination of the stationary seal ring 10 of the first embodiment and the rotating seal ring 520 of the tenth embodiment.

Namely, the first fluid inlet and outlet space S10 is expanded in the depth direction toward the inner space S1 side by the inclined groove 61 of the stationary seal ring 10 and a space S14 formed between the expansion surface 17 of the stationary seal ring 10 and the expansion surface 517 of the rotating seal ring 520. Accordingly, the sealed fluid F can be smoothly supplied to the first fluid inlet and outlet space S10.

### {Twelfth embodiment}

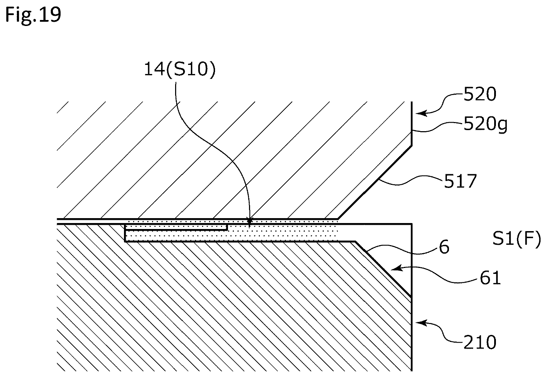

Next, a mechanical seal as a sliding component according to a twelfth embodiment of the present invention will be described with reference to FIG. 19. Incidentally, the descriptions of configurations that are the same as and overlap with the configurations of the first embodiment will be omitted.

The mechanical seal of the twelfth embodiment is configured by a combination of the stationary seal ring 210 of the seventh embodiment and the rotating seal ring 520 of the tenth embodiment.

Namely, the first fluid inlet and outlet space S10 is expanded in the depth direction toward the inner space S1 side by the inclined groove 61 of the stationary seal ring 210 and a space formed between the stationary seal ring 210 and the expansion surface 517 of the rotating seal ring 520. Accordingly, the sealed fluid F can be smoothly supplied to the first fluid inlet and outlet space S10.

### {Thirteenth embodiment}

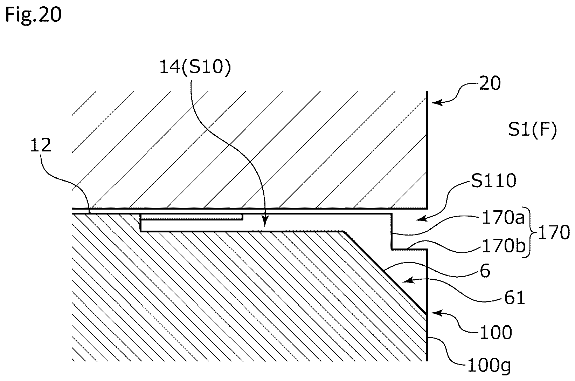

Next, a mechanical seal as a sliding component according to a thirteenth embodiment of the present invention will be described with reference to FIG. 20. Incidentally, the descriptions of configurations that are the same as and overlap with the configurations of the first embodiment will be omitted.

In a stationary seal ring 100 of the mechanical seal of the thirteenth embodiment, an expansion surface 170 having a stepped shape is formed instead of the expansion surface 17 of the stationary seal ring 10 of the first embodiment.

The expansion surface 170 is formed of a first surface 170a and a second surface 170b. The first surface 170a extends from a radially inner end edge of the flat surface of the land 12 in the direction away from the rotating seal ring 20 to be orthogonal to the flat surface of the land 12. The second surface 170b extends from an end edge of the first surface 170a toward an inner peripheral surface 100g of the stationary seal ring 100 in parallel to the flat surface of the land 12.

A communication space S110 is formed between the expansion surface 170 having a stepped shape and the rotating seal ring 20. The communication space S110 allows communication with the inclined grooves 61 adjacent to each other in the circumferential direction.

### {Fourteenth embodiment}

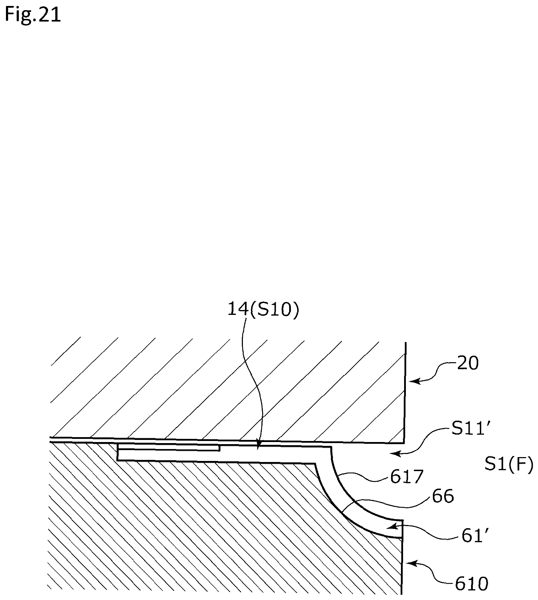

Next, a mechanical seal as a sliding component according to a fourteenth embodiment of the present invention will be described with reference to FIG. 21. Incidentally, the descriptions of configurations that are the same as and overlap with the configurations of the first embodiment will be omitted.

In a stationary seal ring 610 of the mechanical seal of the fourteenth embodiment, an expansion surface 617 and an inclined surface 66 have a curved surface shape that is recessed to the radially outer side and in the depth direction in a cross-sectional view. According to this configuration, a large volume of an inclined groove 61' and a communication space S11' can be ensured and a large amount of the sealed fluid F can be introduced while maintaining a function of being able to smoothly supply the sealed fluid F to the first fluid inlet and outlet space S10 from the depth direction through the inclined surface 66.

Incidentally, the expansion surface and the inclined surface of the stationary seal ring may have a curved surface shape that bulges to the radially inner side and in a direction opposite to the depth direction in a cross-sectional view.

### {Fifteenth embodiment}

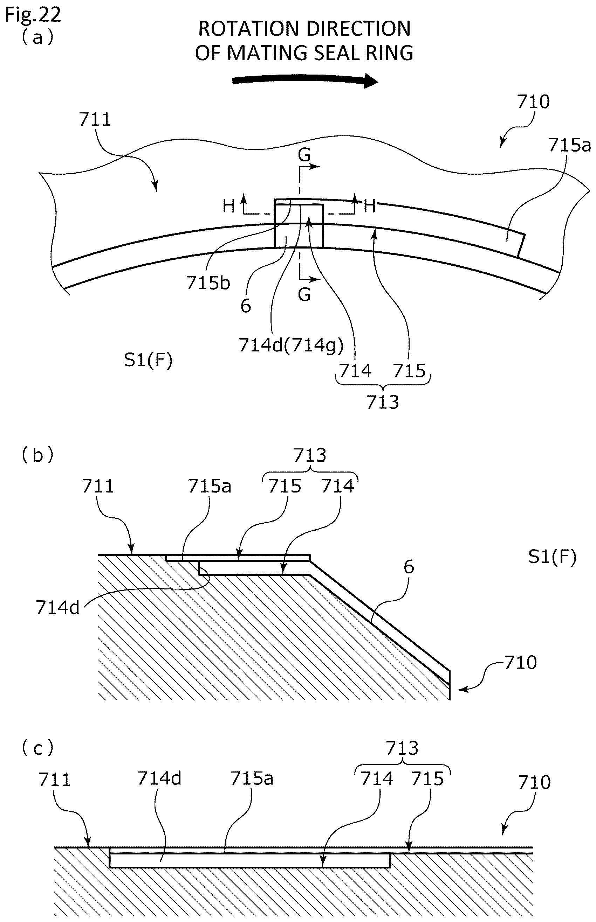

Next, a mechanical seal as a sliding component according to a fifteenth embodiment of the present invention will be described with reference to FIG. 22. Incidentally, the descriptions of configurations that are the same as and overlap with the configurations of the first embodiment will be omitted.

As illustrated in FIGS. 22A to 22C, a stationary seal ring 710 of the mechanical seal of the fifteenth embodiment includes a dynamic pressure generation mechanism 713 on the radially inner side of a sliding surface 711. The dynamic pressure generation mechanism 713 includes a fluid inlet and outlet groove 714 and a Rayleigh step 715 as a dynamic pressure generation groove. The fluid inlet and outlet groove 714 communicates with the inner space S1.

The Rayleigh step 715 extends clockwise from the radially outer side of the fluid inlet and outlet groove 714. A side surface 715b on the radially outer side of the Rayleigh step 715 is disposed radially outside an end surface 714d on the radially outer side of the fluid inlet and outlet groove 714.

A bottom surface 715a of the Rayleigh step 715 is continuous with an end edge 714g on a sliding surface 711 side of the end surface 714d.

When the rotating seal ring 20 slides clockwise relative to the stationary seal ring 710 as indicated by a solid arrow, the sealed fluid F inside the Rayleigh step 715 moves clockwise, and a positive pressure is generated at an end portion of the Rayleigh step 715 and in the vicinity of the end portion.

As described above, since the side surface 715b on the radially outer side of the Rayleigh step 715 is disposed radially outside the end surface 714d on the radially outer side of the fluid inlet and outlet groove 714, a large communication region between the Rayleigh step 715 and the fluid inlet and outlet groove 714 can be ensured. Accordingly, the sealed fluid F easily moves from the fluid inlet and outlet groove 714 to the Rayleigh step 715.

Incidentally, although not illustrated, when the rotating seal ring 20 slides counterclockwise relative to the stationary seal ring 710, the sealed fluid F inside the Rayleigh step 715 moves counterclockwise, and a relative negative pressure is generated in the Rayleigh step 715. Since a part of the Rayleigh step 715 is formed on the radially outer side of the fluid inlet and outlet groove 714, when a relative negative pressure is generated in the Rayleigh step 715, a large region where the relative negative pressure is generated can be ensured.

### {Sixteenth embodiment}

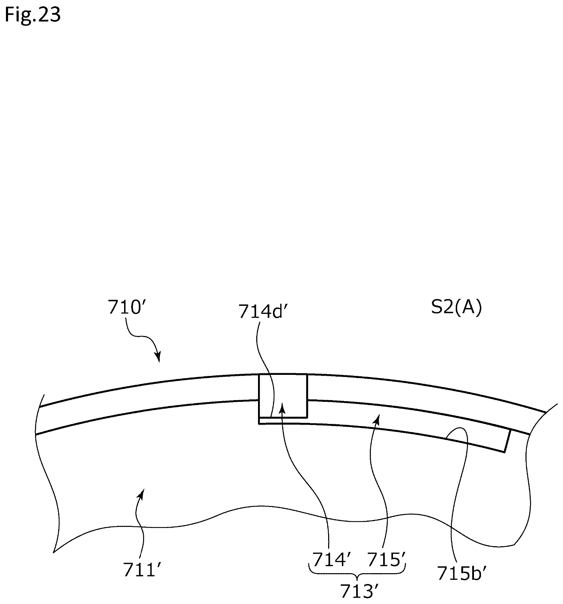

Next, a mechanical seal as a sliding component according to a sixteenth embodiment of the present invention will be described with reference to FIG. 23. Incidentally, the descriptions of configurations that are the same as and overlap with the configurations of the first embodiment will be omitted.

As illustrated in FIG. 23, a stationary seal ring 710' of the mechanical seal of the sixteenth embodiment includes a dynamic pressure generation mechanism 713' on the radially outer side of a sliding surface 711'. The dynamic pressure generation mechanism 713' includes a fluid inlet and outlet groove 714' and a Rayleigh step 715' as a dynamic pressure generation groove. The fluid inlet and outlet groove 714' communicates with the outer space S2.

The Rayleigh step 715' extends clockwise from the radially inner side of the fluid inlet and outlet groove 714'. A side surface 715b' on the radially inner side of the Rayleigh step 715' is disposed radially inside an end surface 714d' on the radially inner side of the fluid inlet and outlet groove 714'.

### {Seventeenth embodiment}

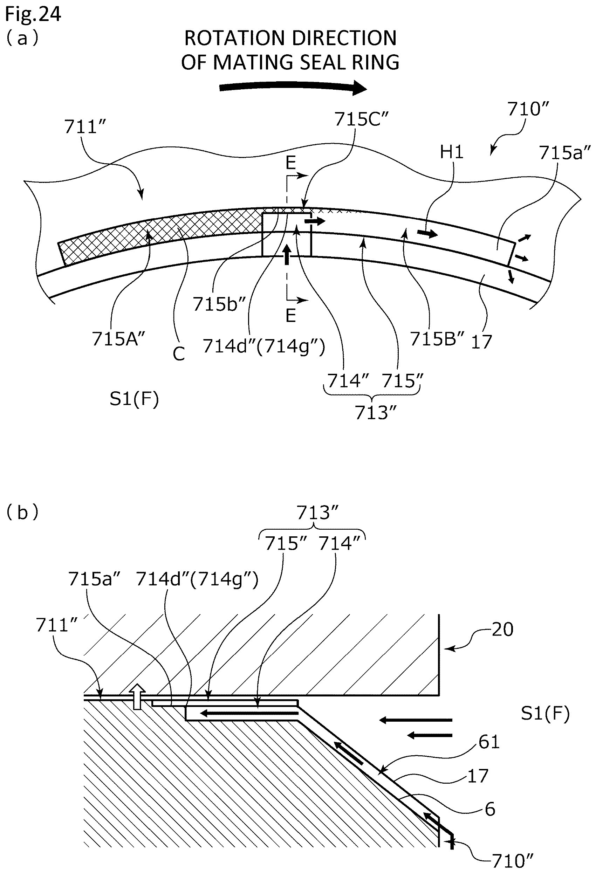

Next, a mechanical seal as a sliding component according to a seventeenth embodiment of the present invention will be described with reference to FIG. 24. Incidentally, the descriptions of configurations that are the same as and overlap with the configurations of the first embodiment will be omitted.

As illustrated in FIGS. 24A and 24B, a stationary seal ring 710" of the mechanical seal of the seventeenth embodiment includes a dynamic pressure generation mechanism 713". The dynamic pressure generation mechanism 713" includes a fluid inlet and outlet groove 714'' and a Rayleigh step 715" as a dynamic pressure generation groove. Incidentally, dynamic pressure generation grooves such as dimples (not illustrated) are formed on the radially outer side of the dynamic pressure generation mechanism 713''.

The Rayleigh step 715'' extends from a radially outer end of the fluid inlet and outlet groove 714'' to both sides in the circumferential direction. In other words, the radially outer end of the fluid inlet and outlet groove 714'' is disposed at a center portion in the circumferential direction of the Rayleigh step 715''. In addition, a radially inner end edge of a bottom surface 715a'' of the Rayleigh step 715'' is continuous with the expansion surface 17.

In addition, a side surface 715b'' on the radially outer side of the Rayleigh step 715'' is disposed radially outside an end surface 714d'' on the radially outer side of the fluid inlet and outlet groove 714''. The bottom surface 715a" of the Rayleigh step 715" is continuous with an end edge 714g" on a sliding surface 711'' side of the end surface 714d". Incidentally, hereinafter, in FIG. 24A, in the Rayleigh step 715'', a portion on the left side of the drawing sheet with respect to the fluid inlet and outlet groove 714'' is referred to as a first portion 715A'', a portion on the right side of the drawing sheet with respect to the fluid inlet and outlet groove 714'' is referred to as a second portion 715B'', and a portion on the radially outer side of the fluid inlet and outlet groove 714'' is referred to as a third portion 715C'' as a communication portion.

As illustrated in FIG. 24A, when the rotating seal ring 20 slides clockwise relative to the stationary seal ring 710'' as indicated by a solid arrow, the sealed fluid F inside the Rayleigh step 715'' moves clockwise as indicated by an arrow H1, and a positive pressure is generated at a closed end portion of the second portion 715B'' and in the vicinity of the closed end portion.

On the other hand, the pressures at the first portion 715A'' and the third portion 715C'' of the Rayleigh step 715" become relatively negative, and a cavitation C occurs (refer to a crosshatched portion in FIG. 24A). The cavitation C is likely to occur mainly along the side surface 715b'' on the radially outer side of the Rayleigh step 715'', and a part of the cavitation C occurs to extend to a part of the second portion 715B''. Incidentally, the crosshatched portion in FIG. 24A indicates a region where the cavitation C occurs, and is illustrated in a more exaggerated manner than the actual one.

In such a manner, since the first portion 715A'' and the second portion 715B'' of the Rayleigh step 715'' communicate with each other through the third portion 715C'', the cavitation occurring at the third portion 715C'' and at the periphery of the third portion 715C'' makes it difficult for the sealed fluid F to leak from the vicinity of a boundary between the first portion 715A'' of the Rayleigh step 715" and the fluid inlet and outlet groove 714'' in a radially outward direction.

Incidentally, when the rotating seal ring 20 slides counterclockwise relative to the stationary seal ring 710'', a positive pressure is generated at a closed end portion of the first portion 715A'' and in the vicinity of the closed end portion, and the cavitation C occurs at the second portion 715B'' and the third portion 715C''. Namely, the stationary seal ring 710'' can cope with both rotations.

In addition, in the present embodiment, a mode in which the bottom surface 715a'' of the Rayleigh step 715'' is a flat surface extending in a horizontal direction has been provided as an example; however, the bottom surface 715a'' may have a tapered shape or a stepped tapered shape in which the bottom surface 715a'' becomes shallower or deeper from the fluid inlet and outlet groove 714'' in the circumferential direction.

In addition, in the present embodiment, a groove having the same depth as the Rayleigh step 715'' has been provided as an example of the third portion 715C'' of the Rayleigh step 715''; however, the present invention is not limited thereto, and the communication portion may be a groove having a depth different from that of the Rayleigh step, namely, the dynamic pressure generation groove.

### {Eighteenth embodiment}

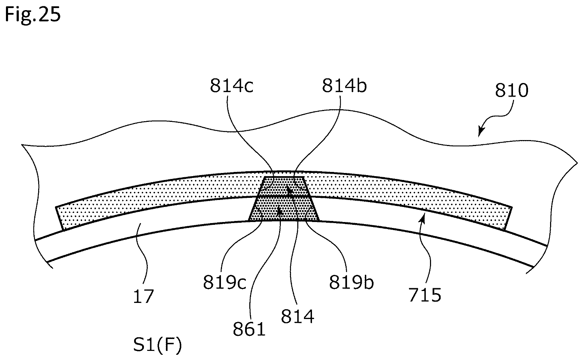

Next, a mechanical seal as a sliding component according to an eighteenth embodiment of the present invention will be described with reference to FIG. 25. Incidentally, the descriptions of configurations that are the same as and overlap with the configurations of the seventeenth embodiment will be omitted.

In a stationary seal ring 810 of the mechanical seal of the eighteenth embodiment, side surfaces 814b and 814c of a fluid inlet and outlet groove 814 and side surfaces 819b and 819c partitioning an inclined groove 861 are inclined such that radially inner ends thereof are separated from each other in the circumferential direction.

According to this configuration, since an opening on the radially inner side of the inclined groove 861 is expanded in the circumferential direction, the sealed fluid F inside the inner space S1 is easily introduced into the inclined groove 861. In addition, since the side surfaces 814b and 814c and the side surfaces 819b and 819c are flatly continuous with each other, the sealed fluid F is easily introduced from the inclined groove 861 into the fluid inlet and outlet groove 814.

### {Nineteenth embodiment}

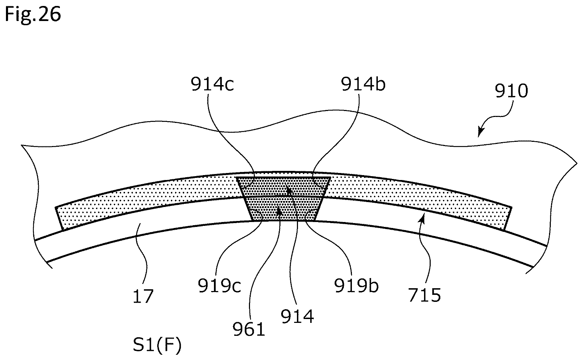

Next, a mechanical seal as a sliding component according to a nineteenth embodiment of the present invention will be described with reference to FIG. 26. Incidentally, the descriptions of configurations that are the same as and overlap with the configurations of the seventeenth embodiment will be omitted.

In a stationary seal ring 910 of the mechanical seal of the nineteenth embodiment, side surfaces 914b and 914c of a fluid inlet and outlet groove 914 and side surfaces 919b and 919c partitioning an inclined groove 961 are inclined such that radially inner ends thereof approach each other in the circumferential direction.

According to this configuration, a large volume can be ensured on the radially outer side of the fluid inlet and outlet groove 914. In addition, since the side surfaces 914b and 914c and the side surfaces 919b and 919c are flatly continuous with each other, the sealed fluid F is easily introduced from the inclined groove 961 into the fluid inlet and outlet groove 914.

### {Twentieth embodiment}

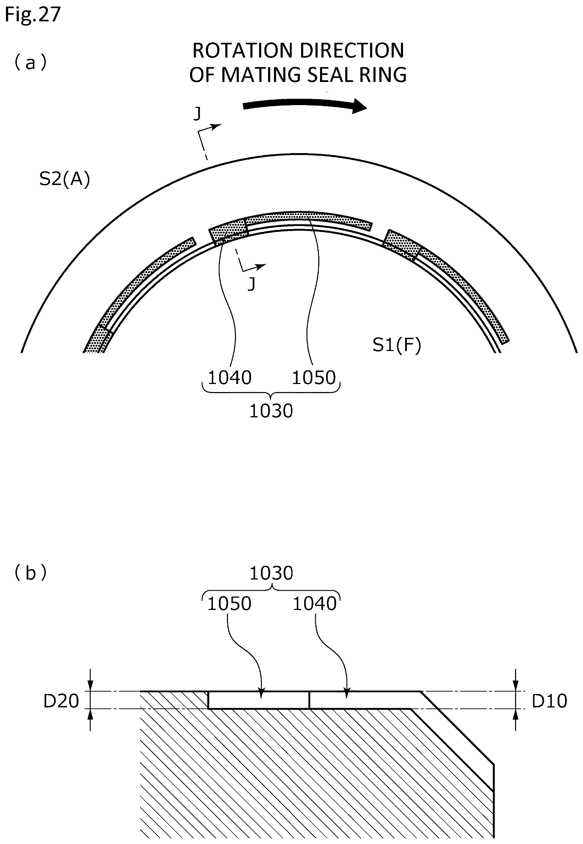

Next, a mechanical seal as a sliding component according to a twentieth embodiment of the present invention will be described with reference to FIG. 27. Incidentally, the descriptions of configurations that are the same as and overlap with the configurations of the first embodiment will be omitted.

As illustrated in FIG. 27A, in the mechanical seal of the twentieth embodiment, dynamic pressure generation mechanisms 1030, each including a fluid inlet and outlet groove 1040 and a dynamic pressure generation groove 1050, are formed on the radially inner side of the sliding surface of the stationary seal ring.

As illustrated in FIG. 27B, a depth D10 of the fluid inlet and outlet groove 1040 is formed to be the same as a depth D20 of the dynamic pressure generation groove 1050 (D10 = D20). According to this configuration, the sealed fluid F can be smoothly introduced from the fluid inlet and outlet groove 1040 into the dynamic pressure generation groove 1050.

### {Twenty-first embodiment}

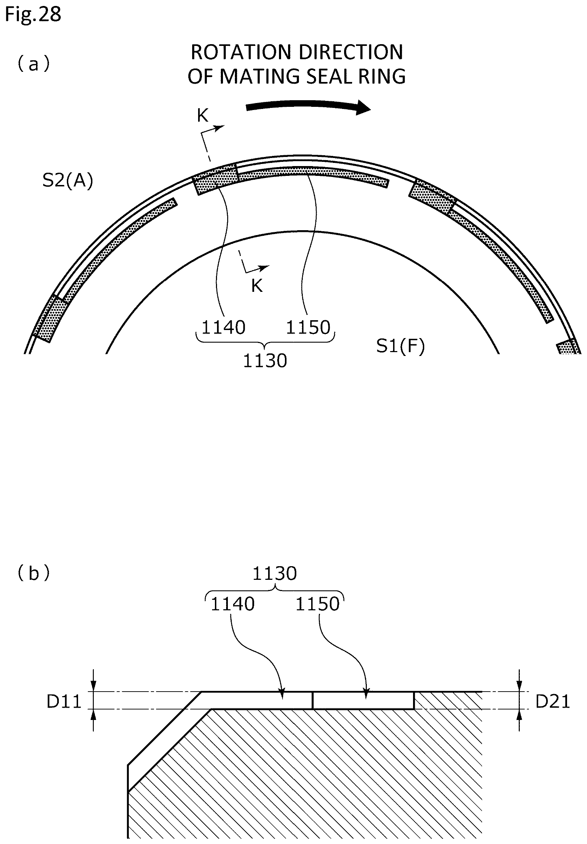

Next, a mechanical seal as a sliding component according to a twenty-first embodiment of the present invention will be described with reference to FIG. 28. Incidentally, the descriptions of configurations that are the same as and overlap with the configurations of the fourth embodiment will be omitted.

As illustrated in FIG. 28A, in the mechanical seal of the twenty-first embodiment, dynamic pressure generation mechanisms 1130, each including a fluid inlet and outlet groove 1140 and a dynamic pressure generation groove 1150, are formed on the radially outer side of the sliding surface of the stationary seal ring.

As illustrated in FIG. 28B, a depth D11 of the fluid inlet and outlet groove 1140 is formed to be the same as a depth D21 of the dynamic pressure generation groove 1150 (D11 = D21). According to this configuration, the atmosphere A can be smoothly introduced from the fluid inlet and outlet groove 1140 into the dynamic pressure generation groove 1150.

### {Twenty-second embodiment}

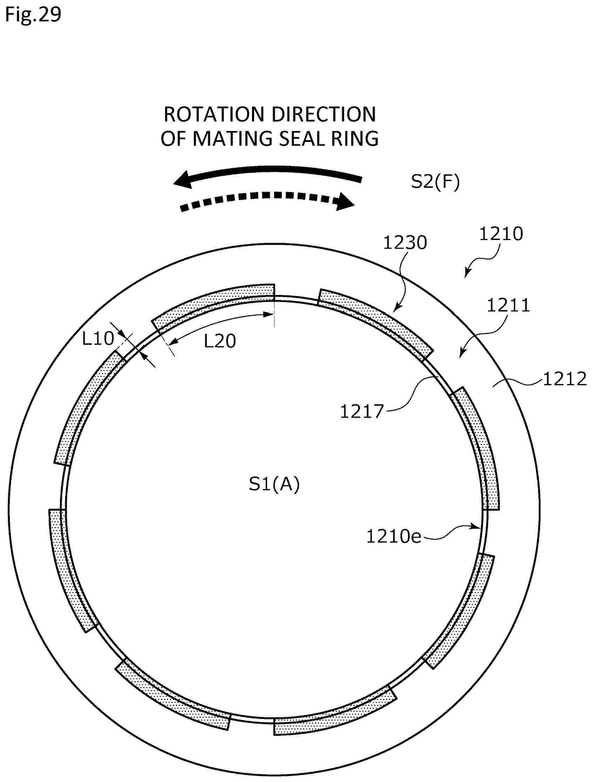

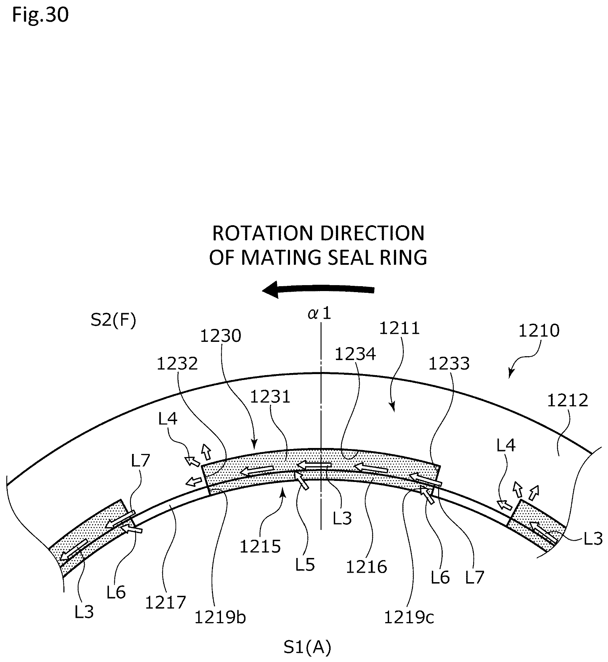

Next, a mechanical seal as a sliding component according to a twenty-second embodiment of the present invention will be described with reference to FIGS. 29 and 30. Incidentally, the descriptions of configurations that are the same as and overlap with the configurations of the first embodiment will be omitted.

As illustrated in FIGS. 29 and 30, a plurality of grooves 1230 and expansion surfaces 1217 are provided at an edge portion 1210e on the inner space S1 side of a sliding surface 1211 of a stationary seal ring 1210 of the twenty-second embodiment. Incidentally, in the twenty-second embodiment, a mode in which the atmosphere A exists in the inner space S1 and the sealed fluid F exists in the outer space S2 will be provided as an example.

The grooves 1230 have a belt shape that is curved in an arcuate shape along the circumferential direction in an axial view. In detail, each of the grooves 1230 includes a bottom surface 1231 substantially parallel to a land 1212; a downstream end surface 1232 as a positive pressure generation portion that rises from a downstream end of the bottom surface 1231 to be substantially orthogonal to the land 1212; an upstream end surface 1233 as a negative pressure generation portion that rises from an upstream end of the bottom surface 1231 to be substantially orthogonal to the land 1212; a peripheral wall surface 1234 rising from a radially outer-side end of the bottom surface 1231 to be substantially orthogonal to the land 1212; an inclined surface 1216 that deepens in depth from a radially inner-side end edge of the bottom surface 1231 toward an inner peripheral surface of the stationary seal ring 1210; and side surfaces 1219b and 1219c rising from both circumferential end edges of the inclined surface 1216.

An opening portion 1215 having a substantially rectangular shape, extending in the circumferential direction, and opening to the radially inner side is formed at the radially inner-side end edges of the bottom surface 1231, the downstream end surface 1232, and the upstream end surface 1233, and the opening portion 1215 communicates with the inner space S1.

The downstream end surface 1232 and the upstream end surface 1233 have the same radial length L10.

In addition, a circumferential length L20 of the opening portion 1215 is longer than the radial length L10 of the downstream end surface 1232 and the upstream end surface 1233 (L10 < L20), and the circumferential length L20 is approximately five times the radial length L10.

Incidentally, the opening portion 1215 is open over an entire length on the radially inner side extending in the circumferential direction, but may be open by at least 1/3 or more, preferably 1/2 or more of a circumferential length of a wall of the groove 1230 (peripheral wall surface 1234 in the present embodiment) extending substantially concentrically along the circumferential direction when viewed in the axial direction. In addition, the circumferential length of the opening portion and the radial length of the groove may be changed as appropriate as long as the circumferential length of the opening portion is larger than the radial length of the groove. In addition, the radial length L10 of the groove 1230 is not hindered from being constant in the circumferential direction.

Incidentally, the depth dimension of the groove 1230 may be changed as appropriate. In addition, the bottom surface of the groove 1230 is a flat surface and is formed parallel to the land 1212, but is not hindered from being provided with fine recessed portions on the flat surface or being formed to be inclined with respect to the land 1212.

In addition, the groove 1230 is line-symmetrically formed with respect to a line α1 extending in the radial direction.

Next, the operation of the stationary seal ring 1210 and the rotating seal ring 20 during relative rotation will be described. First, when the rotating seal ring 20 is not in rotation and is stopped, the sealed fluid F on the radially outer side slightly enters a gap between the sliding surfaces 1211 and 21 due to the capillary phenomenon, and the remaining sealed fluid F and the atmosphere A entering from the radially inner side are mixed in the groove 1230. Incidentally, since the sealed fluid F has a higher viscosity than the atmosphere A, the amount of leakage from the groove 1230 to the low-pressure side during stoppage is small.

In a case where there remains almost no sealed fluid F in the groove 1230 during stoppage of the rotating seal ring 20, when the rotating seal ring 20 rotates relative to the stationary seal ring 1210 (refer to a solid arrow), as illustrated in FIG. 30, the atmosphere A inside the groove 1230 follows and moves in a rotation direction of the rotating seal ring 20 as indicated by an arrow L3, so that a dynamic pressure is generated in the vicinity of the downstream end surface 1232.

The atmosphere A continues to flow to the downstream end surface 1232 as the rotating seal ring 20 rotates, so that the pressure in the vicinity of the downstream end surface 1232 is increased and a positive pressure is generated, and the atmosphere A flows from the vicinity of the downstream end surface 1232 to a periphery of the downstream end surface 1232 as indicated by an arrow L4.

In detail, the atmosphere A that is guided and moves along the peripheral wall surface 1234 flows out from the downstream end surface 1232 into the gap between the sliding surfaces 1211 and 21, particularly, converges toward a corner portion at which the downstream end surface 1232 and the peripheral wall surface 1234 are substantially orthogonal to each other, and flows out from the corner portion into the gap between the sliding surfaces 1211 and 21.

For this reason, the pressure of the atmosphere A flowing out from the corner portion between the downstream end surface 1232 and the peripheral wall surface 1234 is at its highest, and the pressure decreases gradually from the corner portion toward the radially inner side of the downstream end surface 1232 or toward an upstream side of the peripheral wall surface 1234. Incidentally, since a centrifugal force acts on the atmosphere A, the atmosphere A easily flows along the peripheral wall surface 1234.

In addition, since the atmosphere A follows and moves to a downstream end surface 1232 side as the rotating seal ring 20 rotates, and a positive pressure is generated, a negative pressure is generated in the vicinity of the upstream end surface 1233, and the atmosphere A is introduced from a center portion in the circumferential direction of the opening portion 1215 as indicated by an arrow L5 or from the vicinity of the upstream end surface 1233 of the opening portion 1215 as indicated by an arrow L6.

In addition, since the pressure is at its highest in the vicinity of the downstream end surface 1232 of the groove 1230, a majority of the atmosphere A in the vicinity of the downstream end surface 1232 flows out into the gap between the sliding surfaces 1211 and 21, and a fraction of the atmosphere A leaks from the vicinity of the downstream end surface 1232 of the opening portion 1215 to the inner space S1.

In addition, in the vicinity of the upstream end surface 1233, due to the generated negative pressure, the atmosphere A that has flowed out from the vicinity of the downstream end surface 1232 of the adjacent groove 1230 on the upstream side is introduced from an upstream end surface 1233 side as indicated by an arrow L7.

In addition, the sealed fluid F in the vicinity of the downstream end surface 1232 of the groove 1230 between the sliding surfaces 1211 and 21 is pushed back to the radially outer side by the atmosphere A flowing out from the vicinity of the downstream end surface 1232 into the gap between the sliding surfaces 1211 and 21.

In addition, the sealed fluid F in the vicinity of the upstream end surface 1233 of the groove 1230 between the sliding surfaces 1211 and 21 is collected by the negative pressure generated at the upstream end surface 1233. In addition, since the sealed fluid F is easily affected by rotation due to having a higher viscosity and a larger specific gravity than the atmosphere A, when the sealed fluid F is collected into the groove 1230, the sealed fluid F moves along the downstream end surface 1232 or the peripheral wall surface 1234 due to a rotational force or a centrifugal force.

Therefore, the sealed fluid F between the sliding surfaces 1211 and 21 that tends to flow out to the inner space S1 side can be collected and reliably returned from the vicinity of the downstream end surface 1232 into the gap between the sliding surfaces 1211 and 21, together with the atmosphere A.

As described above, during relative rotation of the stationary seal ring 1210 and the rotating seal ring 20, a fluid film is formed on the radially inner side of the gap between the sliding surfaces 1211 and 21 by the atmosphere A. According to this configuration, the sliding surfaces 1211 and 21 can be separated from each other, so that lubricity can be improved by the fluid film.

In such a manner, since the opening portion 1215 that opens wide to the inner space S1 side along the circumferential direction is formed in the groove 1230, even in a case where the pressure in the vicinity of the downstream end surface 1232 of the groove 1230 is increased when the rotation speed of the rotating seal ring 20 increases, a large amount of the atmosphere A can be taken in from the opening portion 1215. In addition, the atmosphere A can be positively taken into the groove 1230 due to the negative pressure generated in the vicinity of the upstream end surface 1233 of the groove 1230.

In addition, since the opening portion 1215 is formed along the radially inner side in the groove 1230, the atmosphere A can be sufficiently taken in from the opening portion 1215, and a high positive pressure can be reliably generated between the sliding surfaces 1211 and 21 from the vicinity of the downstream end surface 1232.

In addition, since the groove 1230 is provided with the inclined surface 1216, the atmosphere A can be positively taken in from a deeper position than that of the bottom surface 1231.

In addition, since the groove 1230 is line-symmetrically formed with respect to the line α1, as indicated by a dotted arrow in FIG. 29, when the rotating seal ring 20 rotates relative to the stationary seal ring 1210 in the clockwise direction on the drawing sheet, the atmosphere A moves from the downstream end surface 1232 toward the upstream end surface 1233, a positive pressure is generated in the vicinity of the upstream end surface 1233, and a negative pressure is generated in the vicinity of the downstream end surface 1232. Namely, when the rotating seal ring 20 rotates relative to the stationary seal ring 1210 in the counterclockwise direction on the drawing sheet, the mechanical seal functions oppositely. Therefore, the mechanical seal can be used without being limited by the relative rotation direction between the stationary seal ring 1210 and the rotating seal ring 20.

In addition, since the plurality of grooves 1230 are provided along the circumferential direction, a pressure balance between the sliding surfaces 1211 and 21 in the circumferential direction is easily achieved. Incidentally, in the present embodiment, a mode in which the grooves 1230 are evenly arranged in the circumferential direction has been provided as an example; however, the grooves 1230 may be unevenly arranged. In addition, the number of the grooves 1230 can be freely changed.

Incidentally, in the twenty-second embodiment, the mode in which the plurality of grooves are provided in the circumferential direction has been provided as an example; however, for example, one groove formed in an arcuate shape of substantially 350 degrees, namely, in a C shape when viewed in the axial direction may be provided.

In addition, in the twenty-second embodiment, a mode in which the downstream end surface of the groove is orthogonal to the circumferential direction and extends in the radial direction has been provided as an example; however, the downstream end surface may be inclined in the circumferential direction such that the corner portion formed by the peripheral wall surface and the downstream end surface forms an acute angle. According to this configuration, since the fluid converges at the corner portion, the positive pressure generation capability can be improved.

In addition, similarly, the upstream end surface may also be inclined in the circumferential direction such that a corner portion formed by the peripheral wall surface and the upstream end surface forms an acute angle. According to this configuration, a high positive pressure generation capability can be exhibited without being limited by the relative rotation direction between the stationary seal ring and the rotating seal ring.

### {Twenty-third embodiment}

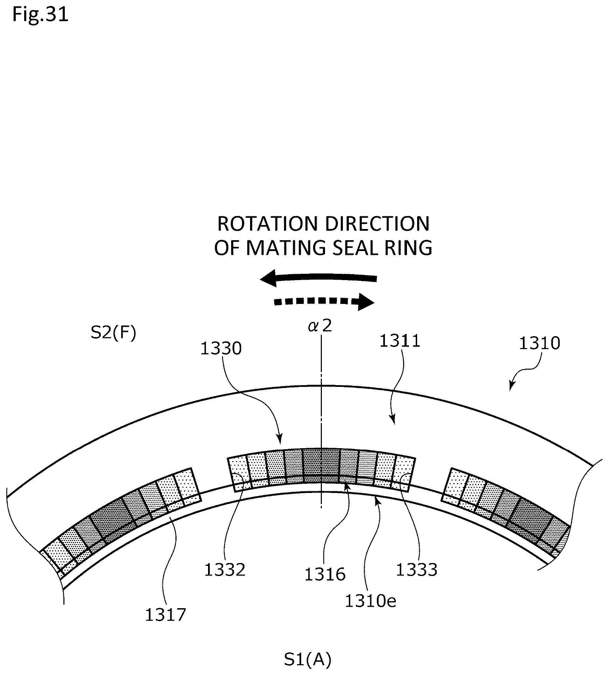

Next, a sliding component according to a twenty-third embodiment of the present invention will be described with reference to FIG. 31. Incidentally, the descriptions of configurations that are the same as and overlap with the configurations of the twenty-second embodiment will be omitted.

As illustrated in FIG. 31, a plurality of grooves 1330 and expansion surfaces 1317 are provided at an edge portion 1310e on the inner space S1 side of a sliding surface 1311 of a stationary seal ring 1310.

Each of the grooves 1330 is deepest at a center portion thereof in the circumferential direction, and becomes shallower in a stepwise manner from the center portion toward a downstream side in a rotation direction and toward an upstream side in the rotation direction. In addition, the groove 1330 is line-symmetrically formed with respect to a line α2 extending in the radial direction. Incidentally, in the groove 1330 of the twenty-third embodiment, an inclined surface 1316 is not continuous with an inner peripheral surface of the stationary seal ring 1310.

According to this configuration, when the rotating seal ring 20 rotates relative to the stationary seal ring 1310 in the counterclockwise direction on the drawing sheet (refer to a solid arrow), a positive pressure is generated in the vicinity of a downstream end surface 1332 of the groove 1330. In addition, when the rotating seal ring 20 rotates relative to the stationary seal ring 1310 in the clockwise direction on the drawing sheet (refer to a dotted arrow), a positive pressure is generated in the vicinity of an upstream end surface 1333 of the groove 1330.

Since the groove 1330 becomes shallower from a center portion thereof in the circumferential direction toward the downstream end surface 1332 and the upstream end surface 1333, a positive pressure and a negative pressure can be efficiently generated in the vicinities of the downstream end surface 1332 and the upstream end surface 1333.

Incidentally, in the twenty-third embodiment, a mode in which the groove becomes shallower in a stepwise manner from the center portion in the circumferential direction toward both circumferential ends has been provided as an example; however, the present invention is not limited thereto, and for example, a bottom surface of the groove may extend linearly or in an arcuate shape to become shallower gradually from a center portion in the circumferential direction to both circumferential ends.

### {Twenty-fourth embodiment}

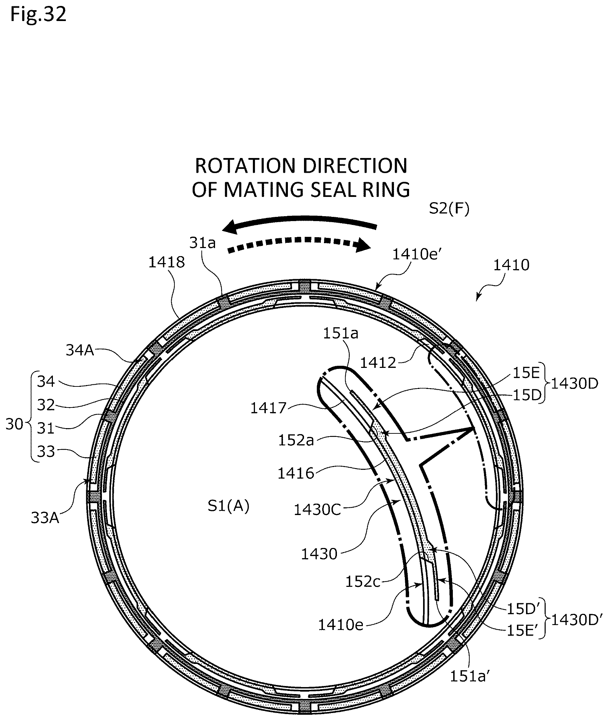

Next, a sliding component according to a twenty-fourth embodiment of the present invention will be described with reference to FIG. 32. Incidentally, the descriptions of configurations that are the same as and overlap with the configurations of the first embodiment will be omitted.

As illustrated in FIG. 32, a plurality of grooves 1430 and expansion surfaces 1417 are provided at an edge portion 1410e on the radially inner side of a stationary seal ring 1410.

Each of the grooves 1430 includes a first groove portion 1430C; a second groove portion 1430D on a downstream side; and a second groove portion 1430D' on an upstream side, and is formed in a substantially inverted Ω shape when viewed in the axial direction. A depth of the groove 1430 is formed constant in the circumferential direction.

The first groove portion 1430C opens to the inner space S1, and extends in an arcuate shape in the circumferential direction. The radially inner side of a bottom surface of the first groove portion 1430C forms an inclined surface 1416 substantially parallel to the expansion surface 1417, and the other portion forms a flat surface substantially parallel to a land 1412.

The second groove portion 1430D includes an inclined portion 15D inclined from a downstream end portion of the first groove portion 1430C to the downstream side in the rotation direction and extending in the radial direction, and an extension portion 15E as a positive pressure generation portion extending in the circumferential direction from a radially outer-side end portion of the inclined portion 15D to the downstream side in the rotation direction, and the second groove portion 1430D is formed in an inverted V shape when viewed in the axial direction.

In addition, the second groove portion 1430D' includes an inclined portion 15D' inclined from an upstream end portion of the first groove portion 1430C to the upstream side in the rotation direction and extending in the radial direction, and an extension portion 15E' as a negative pressure generation portion extending in the circumferential direction from a radially outer-side end portion of the inclined portion 15D' to the upstream side in the rotation direction. The inclined portion 15D and the inclined portion 15D' are inclined and extend from the radially inner side toward the radially outer side in a direction away from each other when viewed in the axial direction, and the extension portions 15E and 15E' extend from the radially outer side thereof in the circumferential direction.

As indicated by a solid arrow in FIG. 32, when the rotating seal ring 20 rotates relative to the stationary seal ring 1410 in the counterclockwise direction on the drawing sheet, since the inclined portion 15D is inclined, the atmosphere A can move along two side wall portions 152a forming the inclined portion 15D, and the atmosphere A can be smoothly introduced into the second groove portion 1430D. In addition, since the extension portion 15E of the second groove portion 1430D has a smaller flow passage cross section than the first groove portion 1430C, a high positive pressure can be generated at an end portion 151a of the extension portion 15E. On the other hand, a negative pressure is generated at an end portion 151a' of the extension portion 15E'.

In addition, as indicated by a dotted arrow in FIG. 32, when the rotating seal ring 20 rotates relative to the stationary seal ring 1410 in the clockwise direction on the drawing sheet, since the inclined portion 15D' is inclined, the atmosphere A can move along two side wall portions 152c forming the inclined portion 15D', and the atmosphere A can be smoothly introduced into the second groove portion 1430D'. In addition, since the extension portion 15E' of the second groove portion 1430D' has a smaller flow passage cross section than the first groove portion 1430C, a high positive pressure can be generated at the end portion 151a' of the extension portion 15E'. On the other hand, a negative pressure is generated at the end portion 151a of the extension portion 15E.

In addition, a specific dynamic pressure generation mechanism 30 is formed on the radially outer side of the stationary seal ring 1410. The specific dynamic pressure generation mechanism 30 includes a plurality of fluid guide groove portions 31; a communication groove portion 32 having an annular shape; Rayleigh steps 33; and reverse Rayleigh steps 34.

An inclined surface 31a that deepens in depth toward the radially outer side is formed at a radially outer-side end portion of a bottom surface of each of the fluid guide groove portions 31. The fluid guide groove portions 31 communicate with the outer space S2 side, and are evenly arranged in the circumferential direction. Incidentally, expansion surfaces 1418 parallel to the inclined surfaces 31a are formed at an edge portion 1410e' on the radially outer side of the stationary seal ring 1410.

The communication groove portion 32 extends in an annular shape to communicate with a radially inner-side end portion of each of the fluid guide groove portions 31.

The Rayleigh step 33 extends concentrically with the stationary seal ring 1410 in the circumferential direction from a position in the fluid guide groove portion 31, which is located radially outside the communication groove portion 32, toward the downstream side.

The reverse Rayleigh step 34 extends concentrically with the stationary seal ring 1410 in the circumferential direction from a position in the fluid guide groove portion 31, which is located radially outside the communication groove portion 32, toward the upstream side.

The fluid guide groove portion 31 and the communication groove portion 32 are formed deeper than a depth dimension of the groove 1430, and the Rayleigh step 33 and the reverse Rayleigh step 34 are formed at the same depth as the groove 1430.

When the rotating seal ring 20 is not in rotation, the sealed fluid F enters the specific dynamic pressure generation mechanism 30. In addition, as indicated by a solid arrow in FIG. 32, when the rotating seal ring 20 rotates relative to the stationary seal ring 1410 in the counterclockwise direction on the drawing sheet, the sealed fluid F moves from the fluid guide groove portion 31 to a Rayleigh step 33 side, and a dynamic pressure is generated inside the Rayleigh step 33. Particularly, during low-speed rotation, a liquid film is formed by the sealed fluid F flowing out from an end portion 33A of the Rayleigh step 33 into a gap between sliding surfaces, so that lubricity can be improved.

In addition, since the fluid guide groove portion 31 and the communication groove portion 32 are deep grooves, a large amount of the sealed fluid F can be held, and during low-speed rotation, poor lubrication between the sliding surfaces can be avoided. In addition, since the inclined surface 31a is formed at the radially outer-side end portion of the fluid guide groove portion 31, the sealed fluid F is smoothly introduced from the outer space S2.

In addition, as indicated by a dotted arrow in FIG. 32, when the rotating seal ring 20 rotates relative to the stationary seal ring 1410 in the clockwise direction on the drawing sheet, the sealed fluid F moves from the fluid guide groove portion 31 to the reverse Rayleigh step 34 side, and a dynamic pressure is generated inside the reverse Rayleigh step 34. Particularly, during low-speed rotation, a liquid film is formed by the sealed fluid F flowing out from an end portion 34A of the reverse Rayleigh step 34 into the gap between the sliding surfaces, so that lubricity can be improved.

In such a manner, the stationary seal ring 1410 of the present embodiment can generate dynamic pressures through the Rayleigh step 33 and the reverse Rayleigh step 34 regardless of the relative rotation direction between the stationary seal ring 1410 and the rotating seal ring 20.

Incidentally, in the present embodiment, a mode in which the second groove portion 1430D is inclined and extends from the end portion in the circumferential direction of the first groove portion 1430C toward the radially outer side has been provided as an example; however, the present invention is not limited thereto, and for example, the second groove portion may extend from the end portion in the circumferential direction of the first groove portion toward the radially outer side, and may be formed in a substantially L shape in which the first groove portion and the second groove portion forms a substantially right angle when viewed in the axial direction.

In addition, in the present embodiment, a mode in which the second groove portion 1430D includes the inclined portion 15D and the extension portion 15E has been provided as an example; however, the configuration of the extension portion may be omitted.

In addition, in the present embodiment, a case where the Rayleigh step and the reverse Rayleigh step have the same depth dimension has been provided as an example; however, the Rayleigh step and the reverse Rayleigh step may be formed with different depth dimensions. In addition, both may be the same or different from each other also in circumferential length and in radial length.

In addition, in the present embodiment, a mode in which the mechanical seal is an inside mechanical seal that seals the sealed fluid F tending to leak from the radially outer side toward the radially inner side of the sliding surfaces has been provided as an example; however, the mechanical seal may be an outside mechanical seal that seals the sealed fluid F tending to leak from the radially inner side toward the radially outer side of the sliding surfaces.

### {Twenty-fifth embodiment}

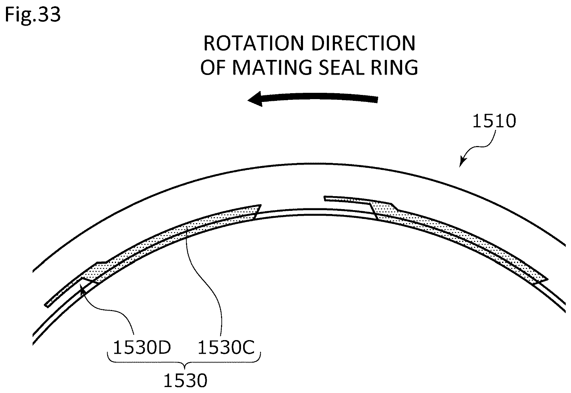

Next, a sliding component according to a twenty-fifth embodiment of the present invention will be described with reference to FIG. 33. Incidentally, the descriptions of configurations that are the same as and overlap with the configurations of the twenty-fourth embodiment will be omitted.

As illustrated in FIG. 33, a groove 1530 provided in a stationary seal ring 1510 includes a first groove portion 1530C and a second groove portion 1530D on the downstream side, and the second groove portion 1430D' on the upstream side in the twenty-fourth embodiment is not provided. In such a manner, as indicated by a solid arrow in FIG. 33, the stationary seal ring 1510 may cope with only when the rotating seal ring 20 rotates relative to the stationary seal ring 1510 in the counterclockwise direction on the drawing sheet.

### {Twenty-sixth embodiment}

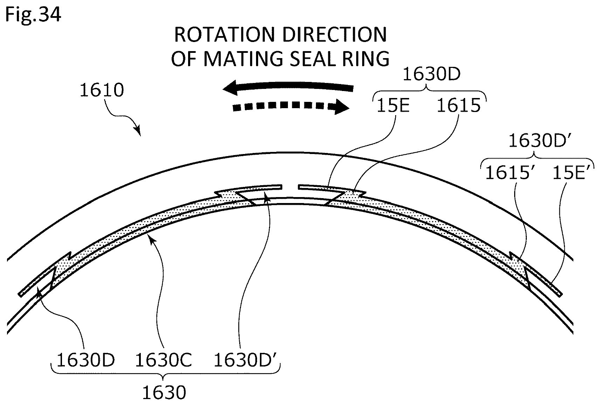

Next, a sliding component according to a twenty-sixth embodiment of the present invention will be described with reference to FIG. 34. Incidentally, the descriptions of configurations that are the same as and overlap with the configurations of the twenty-fourth embodiment will be omitted.

As illustrated in FIG. 34, a groove 1630 provided in a stationary seal ring 1610 includes a first groove portion 1630C; a second groove portion 1630D on the downstream side; and a second groove portion 1630D' on the upstream side.

An inclined portion 1615 of the second groove portion 1630D is inclined from a downstream end portion of the first groove portion 1630C to the upstream side in the rotation direction, and extends in the radial direction. In addition, an inclined portion 1615' of the second groove portion 1630D' is inclined from an upstream end portion of the first groove portion 1630C to the downstream side in the rotation direction, and extends in the radial direction.

Namely, the inclined portion 1615 and the inclined portion 1615' are inclined and extend from the radially inner side toward the radially outer side in a direction toward each other when viewed in the axial direction, and the extension portions 15E and 15E' extend from the radially outer side thereof in a direction away from each other and in the circumferential direction.

The embodiments of the present invention have been described above with reference to the drawings; however, the specific configurations are not limited to the embodiments, and modifications or additions that are made without departing from the scope of the present invention are included in the present invention.

For example, in the embodiments, the mechanical seals have been described as examples of the sliding component, but the sliding component may be a shaft sealing component other than the mechanical seal. Further, the sliding component may be, for example, a bearing component other than the shaft sealing component.

In addition, in the first to twenty-sixth embodiments, an example in which grooves are provided in the stationary seal ring has been described; however, grooves may be provided in the rotating seal ring. In other words, the first sliding ring of the present invention may be the stationary seal ring or the rotating seal ring. In addition, grooves may be provided in both the stationary seal ring and the rotating seal ring.

In addition, in the first to twenty-sixth embodiments, the sealed fluid side and the leakage side have been described as a high-pressure side and a low-pressure side, respectively; however, the sealed fluid side and the leakage side may have substantially the same pressure. When the sealed fluid side and the leakage side have substantially the same pressure, it is preferable that the spiral grooves on the leakage side are formed deeper than the dynamic pressure generation grooves on the sealed fluid side, during low-speed rotation, a positive pressure is generated in the dynamic pressure generation grooves, and during high-speed rotation, a positive pressure is generated in the spiral grooves.

In addition, in the first to twenty-sixth embodiments, the sealed fluid F has been described as a high-pressure liquid, but is not limited thereto, and may be a gas or a low-pressure liquid or may be in the form of a mist that is a mixture of liquid and gas.

In addition, in the first to twenty-sixth embodiments, the fluid on the leakage side has been described as the atmosphere A that is a low-pressure gas, but is not limited thereto, and may be a liquid or a high-pressure gas or may be in the form of a mist that is a mixture of liquid and gas.

In addition, in the first to twenty-sixth embodiments, a mode in which the bottom surface of the fluid inlet and outlet groove extends parallel to the flat surface of the land has been provided as an example; however, the present invention is not limited thereto, and for example, the bottom surface of the fluid inlet and outlet groove may be inclined to become shallower toward the leakage side. Namely, the inclined surface may be deeper toward the sealed fluid side at an angle different from that of the bottom surface of the fluid inlet and outlet groove.

In addition, as in the first to nineteenth embodiments, the depth of the fluid inlet and outlet groove may be deeper than the depth of the dynamic pressure generation groove, and may be applied to the twentieth and twenty-first embodiments. In addition, as in the twentieth and twenty-first embodiments, the depth of the fluid inlet and outlet groove may be the same as the depth of the dynamic pressure generation groove, and may be applied to the first to nineteenth embodiments.

Particular embodiments of the present invention may comprise the sets of features listed in the following numbered statements 1 to 16.

### {Statement 1}

A sliding component comprising a first sliding ring and a second sliding ring that have sliding surfaces rotating relative to each other and that partition a sealed fluid side space and a leakage side space off from each other,
wherein the sliding surface of the first sliding ring is provided with a groove opening to at least one of the sealed fluid side space and the leakage side space, and
at least one of the first sliding ring and the second sliding ling is provided with an inclined surface that is formed at an edge portion thereof on a side of the groove, that faces a fluid space formed between the groove of the first sliding ring and the second sliding ring, and that is expanded toward one of the sealed fluid side space and the leakage side space which is on the side of the groove.

### {Statement 2}

The sliding component according to statement 1,
wherein the groove includes a fluid inlet and outlet groove opening to the sealed fluid side space or the leakage side space on the side of the groove, and a dynamic pressure generation groove communicating with the fluid inlet and outlet groove and extending in a circumferential direction, and
the fluid inlet and outlet groove is deeper than the dynamic pressure generation groove.

### {Statement 3}

The sliding component according to statement 1,
wherein the groove includes a fluid inlet and outlet groove opening to the sealed fluid side space or the leakage side space on the side of the groove, and a dynamic pressure generation groove communicating with the fluid inlet and outlet groove and extending in a circumferential direction, and
the fluid inlet and outlet groove and the dynamic pressure generation groove are equal to each other in depth.

### {Statement 4}

The sliding component according to statement 1,
wherein the inclined surface is provided on the first sliding ring.

### {Statement 5}

The sliding component according to statement 2 or 3,
wherein a bottom surface of the fluid inlet and outlet groove and the inclined surface form an obtuse angle.

### {Statement 6}

The sliding component according to statement 1,
wherein the first sliding ring is provided with an inclined groove defined by the inclined surface and side surfaces rising from both circumferential end edges of the inclined surface,
at least one of the first sliding ring and the second sliding ling is provided with an expansion surface that is formed at an edge portion thereof on a side of the groove, that is expanded toward one of the sealed fluid side space and the leakage side space which is on the side of the groove, and
a communication space partitioned off by the expansion surface and formed to extend in a circumferential direction communicates with the inclined groove.

### {Statement 7}

The sliding component according to statement 2 or 3,
wherein the fluid inlet and outlet groove communicates with one of the sealed fluid side space and the leakage side space on a radially inner side, and
a radially outermost position of the dynamic pressure generation groove is located radially outside a radially outermost position of the fluid inlet and outlet groove.

### {Statement 8}

The sliding component according to statement 2 or 3,
wherein the fluid inlet and outlet groove communicates with one of the sealed fluid side space and the leakage side space on a radially outer side, and
a radially innermost position of the dynamic pressure generation groove is located radially inside a radially innermost position of the fluid inlet and outlet groove.

### {Statement 9}

The sliding component according to statement 7,
wherein the dynamic pressure generation grooves are provided on both circumferential sides of the fluid inlet and outlet groove, and the dynamic pressure generation grooves communicate with each other.

### {Statement 10}

The sliding component according to statement 2 or 3,
wherein the fluid inlet and outlet groove communicates with the sealed fluid side space, and
the sliding surface of the first sliding ring or the second sliding ring is provided with a spiral groove communicating with the leakage side space and not communicating with the sealed fluid side space.

### {Statement 11}

The sliding component according to statement 10,
wherein the first sliding ring is provided with another inclined surface that is formed an edge portion thereof on the leakage side space and that faces another fluid space formed between the spiral groove and the second sliding ring and that is expanded toward the leakage side space.

### {Statement 12}

The sliding component according to statement 1,
wherein a sealed fluid existing in the sealed fluid side space is a liquid, and a fluid existing in the leakage side space is a gas.

### {Statement 13}

The sliding component according to statement 1,
wherein the groove is an open groove having a belt shape in which a circumferential length is longer than a radial length, and
the open groove has at least an opening portion that opens to one of the sealed fluid side space and the leakage side space on the side of the groove along a circumferential direction.

### {Statement 14}

The sliding component according to statement 13,
wherein the open groove includes a first groove portion in which the opening portion is formed and which extends in the circumferential direction, and a second groove portion which extends with a radial component from a downstream end portion of the first groove portion in a relative rotation direction, and of which an end portion is closed.

### {Statement 15}

The sliding component according to statement 14,
wherein the second groove portion includes an inclined portion extending with a radial component, and an extension portion extending from the inclined portion in the circumferential direction.

### {Statement 16}

The sliding component according to any one of statements 13 to 15,
wherein the open groove is line-symmetrically formed with respect to a line extending in a radial direction.

### {REFERENCE SIGNS LIST}

1 Rotating shaft
2 Sleeve
4 Housing
6 Inclined surface
8 Inclined surface (another inclined surface)
10 Stationary seal ring (first sliding ring)
10e Edge portion
11 Sliding surface
12 Land
13 Dynamic pressure generation mechanism
14 Fluid inlet and outlet groove
14A, 14B Opening
14a Bottom surface
15 Rayleigh step (dynamic pressure generation groove)
16 Dynamic pressure generation groove (spiral groove)
16A Opening
16a Bottom surface
17, 18 Expansion surface
20 Rotating seal ring (second sliding ring)
21 Sliding surface
A Atmosphere
F Sealed fluid
S1 Inner space (sealed fluid side space)
S2 Outer space (leakage side space)
S10, S10' First fluid inlet and outlet space (fluid inlet and outlet space)
S12 Second fluid inlet and outlet space (another fluid inlet and outlet space)

## Claims

1. A sliding component comprising a first sliding ring and a second sliding ring that have sliding surfaces rotating relative to each other and that partition a sealed fluid side space and a leakage side space off from each other,
wherein the sliding surface of the first sliding ring is provided with a groove which has an open end opening to at least one of the sealed fluid side space and the leakage side space and a closed end on a side opposed to the open end,
the first sliding ring is provided with an expansion surface that is formed at an edge portion thereof on a groove side on which the groove is provided in a radial direction, that is expanded toward one of the sealed fluid side space and the leakage side space on the groove side,
the expansion surface is continuously connected to the sliding surface of the first sliding ring,
the groove has an opening which is opened at the expansion surface,
the expansion surface exists between an edge of a bottom surface of the groove on a side of the open end and a periphery surface of the first sliding ring on the groove side.

2. The sliding component according to claim 1,
wherein the bottom surface of the groove is continuously connected to the expansion surface.

3. The sliding component according to claim 2,
wherein the groove includes a fluid inlet and outlet groove opening to the sealed fluid side space or the leakage side space on the groove side, and a dynamic pressure generation groove communicating with the fluid inlet and outlet groove and extending in a circumferential direction, and
the fluid inlet and outlet groove is deeper than the dynamic pressure generation groove.

4. The sliding component according to claim 1,
wherein the groove is deepest at a center portion thereof in the circumferential direction, and becomes shallower in a stepwise manner or in a gradual manner from the center portion toward a downstream side in a rotation direction and toward an upstream side in the rotation direction.

5. The sliding component according to claim 4,
wherein the groove has an inclined surface that is formed at an edge portion thereof on a side of the one of the sealed fluid side space and the leakage side space of the groove, that is expanded toward the one of the sealed fluid side space and the leakage side space on the groove side

6. The sliding component according to claim 1,
wherein a sealed fluid existing in the sealed fluid side space is a liquid, and a fluid existing in the leakage side space is a gas.
